# EUROPÄISCHE PATENTSCHRIFT

(11) **EP 3 394 843 B1**
(45) Veröffentlichungstag und Bekanntmachung des Hinweises auf die Patenterteilung: **09.10.2019**
(21) Anmeldenummer: 16805292.6
(22) Anmeldetag: 01.12.2016
(51) Int. Cl.: G08G 1/00, G05D 1/02

(54) **VERFAHREN ZUM BEWEGEN, INSBESONDERE ZUM STEUERN ODER REGELN, EINER FAHRZEUGKOLONNE**
METHOD FOR MOVING, IN PARTICULAR CONTROLLING OR REGULATING, A LINE OF VEHICLES
PROCÉDÉ DE DEPLACEMENT EN PARTICULIER DE COMMANDE OU DE RÉGULATION D'UN CONVOI DE VÉHICULES

(30) Priorität: 23.12.2015 DE 102015016758
(43) Veröffentlichungstag der Anmeldung: 31.10.2018
(73) Patentinhaber: Daimler AG, 70327 Stuttgart (DE)
(72) Erfinder: GEHRING, Ottmar, 70374 Stuttgart (DE); KAUFFMANN, Felix, 73733 Esslingen (DE)
(74) Vertreter: JENSEN & SON
(86) Internationale Anmeldenummer: PCT/EP2016/002026
(87) Internationale Veröffentlichungsnummer: WO 2017/108154

(56) Entgegenhaltungen:
- WO-A1-2015/047174
- WO-A1-2015/047177
- US-A1- 2002 069 010
- US-A1- 2015 019 117

## Beschreibung

Die Erfindung betrifft ein Verfahren zum Bewegen, insbesondere zum Steuern oder Regeln, einer Fahrzeugkolonne gemäß dem Oberbegriff von Patentanspruch 1.

Ein solches Verfahren zum Bewegen, insbesondere zum Regeln oder Steuern, einer ein erstes Fahrzeug und wenigstens ein dem ersten Fahrzeug ständig und direkt folgendes, zweites Fahrzeug aufweisenden Fahrzeugkolonne ist beispielsweise bereits der WO 2015/047177 A1 und der WO 2015/047178 A1 als bekannt zu entnehmen.

Ebenso zeigen die US 2015019117 A1, die US 2002 069010 A1 und die gattungsgemäße WO 2015 047174 A1 und WO 2015 047182 A1 ein solches Verfahren. Bei dem Verfahren werden die beispielsweise als Nutzfahrzeuge ausgebildeten Fahrzeuge auf Basis einer der Fahrzeugkolonne zugeordneten, vorgebbaren Gesamtbetriebsstrategie zumindest vorübergehend in einem vorgebbaren, gleichbleibenden Abstand zueinander entlang einer Fahrstrecke bewegt. Dies bedeutet, dass der Abstand zumindest vorübergehend gleich bleibt.

Das Verfahren wird insbesondere mittels einer Recheneinrichtung, insbesondere einer elektronischen Recheneinrichtung, durchgeführt, wobei diese Recheneinrichtung beispielsweise zumindest eine Einzelrecheneinrichtung oder jeweilige Einzelrecheneinrichtungen, insbesondere Steuergeräte, der jeweiligen Fahrzeuge umfassen kann. Dies bedeutet, dass die Fahrzeuge mittels der Recheneinrichtung bewegt, insbesondere gesteuert oder geregelt, werden, sodass der Abstand mittels der Recheneinrichtung eingestellt und gleich gehalten wird. Mittels der Recheneinrichtung erfolgt insbesondere eine Längsdynamikregelung der Fahrzeuge. Im Rahmen einer solchen Längsdynamikregelung wird die jeweilige Längsdynamik des jeweiligen Fahrzeugs mittels der Recheneinrichtung eingestellt beziehungsweise beeinflusst. Unter der Längsdynamikregelung ist zu verstehen, dass mittels der Recheneinrichtung jeweilige Antriebskräfte beziehungsweise Antriebsmomente zum Antreiben der jeweiligen Fahrzeuge und/oder jeweilige Bremskräfte beziehungsweise Bremsmomente zum Abbremsen der jeweiligen Fahrzeuge eingestellt beziehungsweise vorgegeben werden. Dadurch ist es beispielsweise möglich, dass die Recheneinrichtung jeweilige Geschwindigkeiten, mit denen die Fahrzeuge entlang der Fahrstrecke bewegt werden, einstellt und vorgibt.

Durch den Einsatz des Verfahrens ist es möglich, den Abstand zwischen den Fahrzeugen auf einen besonders vorteilhaften und insbesondere geringen Wert einzustellen, sodass die Fahrzeuge besonders energiegünstig entlang der Fahrstrecke bewegt werden können, ohne dass dies zu Lasten der Fahrsicherheit geht. Mit anderen Worten ist es mittels des Verfahrens möglich, die Fahrzeuge entlang der Fahrstrecke zu bewegen und dabei den Abstand besonders gering zu halten, sodass beispielsweise der Luftwiderstand gering gehalten werden kann. Dadurch können der Energiebedarf und insbesondere der Kraftstoffverbrauch zum Bewegen, insbesondere Fahren, der Fahrzeuge entlang der Fahrstrecke gering gehalten werden.

Gleichzeitig kann dadurch, dass das Verfahren mittels der Recheneinrichtung durchgeführt wird, die Gefahr, dass es aufgrund des geringen Abstands zwischen den Fahrzeugen zu einem Unfall der Fahrzeuge kommt, besonders gering gehalten werden, da beispielsweise aufgrund dessen, dass die Längsdynamikregelung mittels der Recheneinrichtung erfolgt, jeweilige Reaktionszeiten von jeweiligen Fahrern der Fahrzeuge als potentielle Gefahren- beziehungsweise Unfallursachen zumindest im Wesentlichen ausgeschlossen werden können.

Um die Fahrzeuge entlang der Fahrstrecke in dem vorgebbaren Abstand zueinander zu bewegen, werden beispielsweise jeweilige Antriebsstränge zum Antreiben und/oder Abbremsen der Fahrzeuge mittels der Recheneinrichtung, insbesondere automatisch, betrieben.

Des Weiteren offenbart die DE 10 2014 019 543 A1 ein Verfahren zum Betrieb eines Antriebsstrangs eines Fahrzeugs, wobei in Abhängigkeit von einem vorausliegenden Streckenprofil eine Betriebsstrategie für den Antriebsstrang ermittelt wird und wobei mittels einer Vorausschausimulation zumindest eine Geschwindigkeitstrajektorie des Fahrzeugs für das vorausliegende Streckenprofil prognostiziert wird. Ferner ist es vorgesehen, dass bei einer prognostizierten Überschreitung einer vorgegebenen Maximalgeschwindigkeit eine Gangstufe eines Getriebes des Antriebsstrangs ermittelt wird, bei welcher durch eine Motorbremswirkung eines Verbrennungsmotors des Antriebsstrangs in einem Schubbetrieb das Überschreiten der vorgegebenen Maximalgeschwindigkeit vermeidbar ist und eine Schaltempfehlung zum Einlegen der ermittelten Gangstufe generiert wird und/oder die ermittelte Gangstufe an einer ermittelten Position auf dem Streckenprofil eingelegt wird.

Außerdem ist aus der DE 10 2009 033 866 A1 ein Verfahren zum Betreiben eines Kraftwagens mit einem Hybridantrieb bekannt, bei welchem zwischen einer Mehrzahl von Fahrbetriebsarten gewählt wird. Dabei wird bei Vorliegen einer Antriebsmomentenanforderung ein Normalbetriebszustand gewählt, wobei ein Gang in einem Getriebe eingelegt ist, eine Kupplung geschlossen ist und ein Antriebsmoment von der Brennkraftmaschine bereitgestellt wird. Bei Vorliegen keiner Antriebsmomentenanforderung wird ein erster Rollbetriebszustand gewählt, bei welchem eine Antriebsverbindung zwischen der Brennkraftmaschine und einer Getriebeausgangswelle unterbrochen ist.

Ferner ist es vorgesehen, dass bei Vorliegen einer Antriebsmomentenanforderung unterhalb eines vorgegebenen Schwellwerts ein zweiter Rollbetriebszustand gewählt wird, bei welchem ein Gang im Getriebe eingelegt ist, die Kupplung geöffnet ist und ein Antriebsmoment von einem Elektromotor bereitgestellt wird.

Aufgabe der vorliegenden Erfindung ist es, ein Verfahren der eingangs genannten Art derart weiterzuentwickeln, dass die Fahrzeuge und somit die Fahrzeugkolonne insgesamt besonders energieeffizient bewegt werden kann.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den übrigen Ansprüchen angegeben.

Um ein Verfahren der im Oberbegriff des Patentanspruchs 1 angegebenen Art derart weiterzuentwickeln, dass die Fahrzeuge und somit die Fahrzeugkolonne insgesamt besonders energieeffizient und somit energieverbrauchsarm, insbesondere kraftstoffverbrauchsarm, bewegt, insbesondere autonom oder automatisch beziehungsweise automatisiert bewegt, werden können, ist erfindungsgemäß ein erster Schritt vorgesehen, bei welchem für das jeweilige Fahrzeug der Fahrzeugkolonne in Abhängigkeit von einem vorausliegenden, das heißt vor der Fahrzeugkolonne angeordneten Streckenprofil eine jeweilige Einzelbetriebsstrategie vorgegeben wird.

Dabei unterscheiden sich die Einzelbetriebsstrategien der Fahrzeuge voneinander. Bei einem zweiten Schritt des Verfahrens wird im Rahmen der Gesamtbetriebsstrategie der Abstand der Fahrzeuge vergrößert, bevor die Fahrzeugkolonne das Streckenprofil erreicht. Mit anderen Worten liegt das Streckenprofil zu wenigstens einem ersten Zeitpunkt vor der Fahrzeugkolonne. Beispielsweise zu diesem ersten Zeitpunkt wird die jeweilige Einzelbetriebsstrategie vorgegeben. Beispielsweise zu einem zeitlich auf den ersten Zeitpunkt folgenden, zweiten Zeitpunkt erreicht die Fahrzeugkolonne das Streckenprofil, wobei der Abstand der Fahrzeuge vor dem zweiten Zeitpunkt und beispielsweise zu oder nach dem ersten Zeitpunkt vergrößert wird. Beispielsweise weist der Abstand zunächst einen ersten Wert auf. Im Rahmen des Vergrößerns des Abstands wird der Abstand von dem ersten Wert auf einen gegenüber dem ersten Wert größeren, zweiten Wert vergrößert.

Das Verfahren umfasst ferner einen dritten Schritt, bei welchem das jeweilige Fahrzeug auf Basis der jeweiligen Einzelbetriebsstrategie entlang des Streckenprofils bewegt wird. Zu einem zeitlich auf den zweiten Zeitpunkt folgenden, dritten Zeitpunkt hat die Fahrzeugkolonne das zum ersten Zeitpunkt noch vor der Fahrzeugkolonne liegende Streckenprofil bereits zurückgelegt, sodass dann zu dem dritten Zeitpunkt das Streckenprofil in Fahrtrichtung der Fahrzeugkolonne hinter dieser angeordnet ist. Infolge des Bewegens der Fahrzeugkolonne entlang des Streckenprofils legt die Fahrzeugkolonne das Streckenprofil zurück, wonach das Streckenprofil in Fahrtrichtung der Fahrzeugkolonne hinter dieser liegt. Ferner umfasst das erfindungsgemäße Verfahren einen vierten Schritt, bei welchem die Fahrzeugkolonne nach Zurücklegen des Streckenprofils auf Basis der Gesamtbetriebsstrategie bewegt wird.

Die Fahrzeugkolonne besteht dabei aus mindestens zwei Fahrzeugen, wobei das zweite Fahrzeug dem ersten Fahrzeug ständig und direkt folgt. Mit "ständig" ist gemeint, dass sich die beiden Fahrzeuge über den Zeitraum der Anwendung des erfindungsgemäßen Verfahrens ununterbrochen folgen. Mit "direkt" ist gemeint, dass das zweite Fahrzeug dem ersten Fahrzeug unmittelbar folgt, dass sich also während des Verfahrensablaufes kein weiteres Kolonnenfahrzeug zwischen dem ersten und dem zweiten Fahrzeug einordnet, und dass sich auch die Reihenfolge der beiden Fahrzeuge sich nicht ändert.

Der Erfindung liegt die Idee zugrunde, die Fahrzeugkolonne auf Basis der Gesamtbetriebsstrategie zu bewegen, wobei der Abstand zur Gesamtbetriebsstrategie gehört beziehungsweise Teil der Gesamtbetriebsstrategie ist. Durch das Bewegen beziehungsweise Fahren der Fahrzeugkolonne auf Basis der Gesamtbetriebsstrategie kann der Abstand beispielsweise besonders gering gehalten werden, sodass die Fahrzeugkolonne besonders energieeffizient und somit energieverbrauchsarm, insbesondere kraftstoffverbrauchsarm, entlang der Fahrstrecke bewegt werden kann. Das Durchführen der Gesamtbetriebsstrategie, das heißt das Bewegen der Fahrzeugkolonne auf Basis der Gesamtbetriebsstrategie, kann, wie im Zusammenhang mit dem Stand der Technik geschildert, erfolgen, sodass die Gesamtbetriebsstrategie beispielsweise mittels einer Recheneinrichtung durchgeführt wird. Die Recheneinrichtung ist beispielsweise eine elektronische Recheneinrichtung und/oder kann wenigstens eine Recheneinrichtung zumindest eines der Fahrzeuge und/oder jeweilige Recheneinrichtungen, insbesondere elektronische Recheneinrichtungen wie beispielsweise Steuergeräte, der jeweiligen Fahrzeuge umfassen. Dadurch werden die jeweiligen Fahrzeuge im Rahmen der Gesamtbetriebsstrategie beziehungsweise im Rahmen des Verfahrens beispielsweise autonom oder automatisch beziehungsweise automatisiert mittels der Recheneinrichtung bewegt. Das Verfahren ist eine prädiktive Betriebsstrategie zum beispielsweise automatisierten Bewegen, insbesondere Fahren, der Fahrzeugkolonne, da beim Bewegen der Fahrzeugkolonne das vorausliegende Streckenprofil berücksichtigt wird, obwohl die Fahrzeugkolonne das Streckenprofil noch gar nicht erreicht hat, sondern erst in Zukunft erreichen wird.

Mittels der Recheneinrichtung wird beispielsweise eine Längsdynamikregelung durchgeführt, sodass die Fahrzeugkolonne beispielsweise mittels der Recheneinrichtung gesteuert oder geregelt wird. Im Rahmen der Längsdynamikregelung stellt die Recheneinrichtung ein Antriebskraft beziehungsweise ein Antriebsmoment zum Antreiben des jeweiligen Fahrzeugs und/oder eine jeweilige Geschwindigkeit des jeweiligen Fahrzeugs ein. Alternativ oder zusätzlich ist es möglich, dass die Recheneinrichtung im Rahmen der Längsdynamikregelung eine Bremskraft beziehungsweise ein Bremsmoment zum Abbremsen des jeweiligen Fahrzeugs einstellt. Hierdurch kann beispielsweise das jeweilige Fahrzeug mittels der Recheneinrichtung im Rahmen der Gesamtbetriebsstrategie beziehungsweise im Rahmen des Verfahrens autonom oder automatisch bewegt werden, sodass die Fahrzeuge in dem nur geringen Abstand zueinander bewegt werden können. Dadurch kann insbesondere der Luftwiderstand gering gehalten werden. Gleichzeitig ist es möglich, die Fahrzeuge besonders sicher zu bewegen.

Dem erfindungsgemäßen Verfahren liegt ferner die Idee zugrunde, die Gesamtbetriebsstrategie zumindest vorübergehend aufzulösen beziehungsweise aufzulockern und die Fahrzeuge zumindest vorübergehend auf Basis der jeweiligen Einzelbetriebsstrategien, insbesondere automatisch oder autonom oder teilautonom, zu bewegen, wobei sich diese Einzelbetriebsstrategien voneinander unterscheiden. Zur Realisierung der jeweiligen Einzelbetriebsstrategien wird der Abstand vergrößert beziehungsweise aufgeweitet, sodass das jeweilige Fahrzeug auf Basis seiner jeweiligen, eigenen und optimierten Einzelbetriebsstrategie, insbesondere automatisch oder autonom, bewegt werden kann. Hierdurch ist es beispielsweise möglich, im Rahmen des Bewegens der Fahrzeugkolonne beziehungsweise der jeweiligen Fahrzeuge entlang des Streckenprofils unterschiedliche Voraussetzungen beziehungsweise Randbedingungen, insbesondere unterschiedliche Zustände der Fahrzeuge, zu berücksichtigen.

Im Rahmen des Durchführens der jeweiligen Einzelbetriebsstrategie bleibt jedoch die Gesamtbetriebsstrategie erhalten, denn eine Zusammenführung der Fahrzeuge oder der Einzelbetriebsstrategien zu der einheitlichen Gesamtbetriebsstrategie nach dem Ende der jeweiligen Einzelbetriebsstrategien, das heißt nach dem Zurücklegen des Streckenprofils, steht schon vor dem Zurücklegen beziehungsweise Befahren des Streckenprofils fest beziehungsweise ist schon davor vorgesehen. Dies bedeutet, dass die Einzelbetriebsstrategien als Unterstrategien angesehen werden können, bei deren Durchführung die Gesamtbetriebsstrategie, welche eine Gesamtfahrstrategie ist, vorübergehend unterbrochen, ausgesetzt, den Einzelbetriebsstrategien untergeordnet oder zumindest aufgelockert wird. Von der Gesamtbetriebsstrategie beziehungsweise im Rahmen dieser werden die Einzelbetriebsstrategien festgelegt, damit eine Auftrennung der Fahrzeuge, das heißt die Vergrößerung des Abstands, dort erst koordiniert beziehungsweise aufeinander abgestimmt erfolgen kann.

Die Fahrzeuge der Fahrzeugkolonne bilden einen Verband, der vor Erreichen des Streckenprofils beispielsweise zeitlich und/oder räumlich begrenzt erweitert beziehungsweise aufgelöst und beispielsweise in Unter- oder Teil- oder Kleinverbände oder Einzelfahrzeuge aufgeteilt wird, sodass diese Unter- beziehungsweise Kleinverbände oder Einzelfahrzeuge jeweils besonders energieeffizient auf Basis der jeweiligen Einzelbetriebsstrategie entlang des Streckenprofils bewegt werden können. Dadurch kann der zum Bewegen der Fahrzeuge beziehungsweise der Fahrzeugkolonne insgesamt entlang des Streckenprofils erforderliche Gesamtenergiebedarf minimiert werden. Beim Zurücklegen des Streckenprofils, das heißt beim Durchführen der jeweiligen Einzelbetriebsstrategie, ist der Verband beziehungsweise die Fahrzeugkolonne insgesamt, insbesondere zeitlich und/oder räumlich, eigenständiger als zuvor und danach beim Durchführen der Gesamtbetriebsstrategie, aber dennoch ist die Gesamtbetriebsstrategie nicht vollständig aufgehoben beziehungsweise aufgelöst, da eine Wiedervereinigung der Fahrzeuge zu dem Verband im Rahmen der Durchführung der Gesamtbetriebsstrategie nach dem Zurücklegen des Streckenprofils bereits vor oder bei der Vergrößerung des Abstands feststeht. Somit können auch die Einzelbetriebsstrategien als Einzel- oder Gruppenstrategien bei oder vor dem Vergrößern des Abstands bereits vorbestimmt beziehungsweise vorgegeben sein und beispielsweise dem jeweiligen, einzelnen Fahrzeug übermittelt werden. Dann sind beispielsweise auch zur Bestimmung einer Auftrennung beziehungsweise Unterteilung des Verbands durch das Vergrößern des Abstands die Einzelbetriebsstrategien vorbestimmt, welche beim Zurücklegen des Streckenprofils, das heißt beim Bewegen der jeweiligen Fahrzeuge entlang des Streckenprofils, eingehalten beziehungsweise durchgeführt werden. Somit kann der Gesamtenergieverbrauch gering gehalten werden.

Die Vergrößerung des Abstands vor dem Bewegen der Fahrzeuge entlang des Streckenprofils und somit vor dem Durchführen der jeweiligen Einzelbetriebsstrategien wird durchgeführt, um beispielsweise eine unerwünschte, gegenseitige Beeinträchtigung der Fahrzeuge, wenn diese entlang des Streckenprofils bewegt werden, zu vermeiden. Dadurch kann beispielsweise vermieden werden, dass das zweite Fahrzeug durch das erste Fahrzeug aufgehalten oder an dem ersten Fahrzeug vorbei bewegt wird. Durch das Vergrößern des Abstands und das Durchführen der Einzelbetriebsstrategien ist es möglich, dass die Fahrzeuge beispielsweise an derselben Stelle des Streckenprofils nicht mit einer gleichen beziehungsweise analogen Fahrstrategie bewegt werden müssen, sondern die Fahrstrategien beziehungsweise Einzelbetriebsstrategien können sich unterscheiden, sodass die Fahrzeuge im Rahmen der jeweiligen Einzelbetriebsstrategien an wenigstens einer gleichen Stelle des Streckenprofils auf voneinander unterschiedliche Weise bewegt werden. Dadurch kann beispielsweise der Energieverbrauch des jeweiligen Fahrzeugs minimiert werden, sodass der Gesamtenergieverbrauch der Fahrzeugkolonne insgesamt minimiert werden kann.

Um die Fahrzeugkolonne besonders energieeffizient zu bewegen, insbesondere zu regeln oder zu steuern, ist es bei einer vorteilhaften Ausführungsform der Erfindung vorgesehen, dass der Abstand nach einem Beginn des Streckenprofils, das heißt beispielsweise zu dem dritten Zeitpunkt, verringert wird. Dadurch kann die Fahrzeugkolonne insgesamt nach dem Durchführen der jeweiligen Einzelbetriebsstrategien wieder auf Basis der Gesamtbetriebsstrategie besonders energieeffizient, insbesondere autonom oder automatisch, bewegt werden. Der dritte Zeitpunkt kann dabei während des Durchfahrens des Streckenprofils stattfinden oder auch erst nach dem Durchfahren des Streckenprofils.

Als besonders vorteilhaft hat es sich gezeigt, wenn sich die Einzelbetriebsstrategien in ihren Geschwindigkeiten voneinander unterscheiden, mit welchen die jeweiligen Fahrzeuge entlang des Streckenprofils bewegt werden. Mit anderen Worten weisen die Einzelbetriebsstrategien beispielsweise unterschiedliche Geschwindigkeitsprofile beziehungsweise unterschiedliche Geschwindigkeitstrajektorien auf, auf deren Basis die Fahrzeuge mit jeweiligen Geschwindigkeiten entlang des Streckenprofils bewegt werden. Dabei unterscheiden sich die Geschwindigkeiten der Fahrzeuge an zumindest einer Stelle des Streckenprofils voneinander. Hierdurch können beispielsweise unterschiedliche Randbedingungen beziehungsweise unterschiedliche Zustände der Fahrzeuge berücksichtigt werden, um das jeweilige Fahrzeug an sich besonders energieeffizient zu bewegen. Somit kann der Gesamtenergieverbrauch gering gehalten werden. Alternativ oder zusätzlich ist es denkbar, dass sich die Einzelbetriebsstrategien in ihren jeweiligen Beschleunigungen voneinander unterscheiden, mit welchen die Fahrzeuge entlang des Streckenprofils beschleunigt werden. Unter einer solchen Beschleunigung ist eine positive Beschleunigung zu verstehen, mittels welcher die Geschwindigkeit des jeweiligen Fahrzeugs erhöht wird. Ferner ist unter der jeweiligen Beschleunigung eine negative Beschleunigung zu verstehen, mittels welcher die Geschwindigkeit des jeweiligen Fahrzeugs verringert wird, das heißt mittels welcher das jeweilige Fahrzeug abgebremst wird. Durch diese Unterschiede in der Geschwindigkeit beziehungsweise Beschleunigung ist es beispielsweise möglich, unterschiedliche Gewichte und/oder unterschiedliche Fahrwiderstände der Fahrzeuge zu berücksichtigen, um die Fahrzeuge und somit die Fahrzeugkolonne insgesamt besonders energieeffizient bewegen, insbesondere fahren, zu können.

Unter dem Bewegen des jeweiligen Fahrzeugs beziehungsweise der Fahrzeugkolonne ist zu verstehen, dass im Rahmen des Verfahrens beispielsweise ein jeweiliger Antriebsstrang zum Antreiben und/oder Abbremsen des jeweiligen Fahrzeugs mittels der Recheneinrichtung, insbesondere automatisch oder autonom, betrieben wird. Hierdurch ist es beispielsweise möglich, das jeweilige Fahrzeug zu beschleunigen und/oder abzubremsen, ohne dass hierfür ein Zutun eines Fahrers des jeweiligen Fahrzeugs erforderlich ist. Wie bereits angedeutet, kann die Recheneinrichtung genau eine Recheneinrichtung eines der Fahrzeuge oder jeweilige Einzelrecheneinrichtungen der Fahrzeuge umfasst. Alternativ oder zusätzlich ist es denkbar, dass die Recheneinrichtung zum Durchführen des Verfahrens, das heißt zum Bewegen, insbesondere Steuern oder Regeln, der Fahrzeuge und somit der Fahrzeugkolonne eine bezogen auf die Fahrzeuge externe, insbesondere elektronische, Recheneinrichtung ist. Die Recheneinrichtung steuert beispielsweise jeweilige Aktoren des jeweiligen Fahrzeugs an, sodass mittels dieser Aktoren Antriebskräfte beziehungsweise Antriebsmomente zum Antreiben des jeweiligen Fahrzeugs und/oder Bremskräfte beziehungsweise Bremsmomente zum Abbremsen des jeweiligen Fahrzeugs bewirkt werden können. Da die Aktoren von der Recheneinrichtung angesteuert werden, werden eine Beschleunigung und/oder ein Abbremsen des jeweiligen Fahrzeugs mittels der Recheneinrichtung über die jeweiligen Aktoren bewirkt.

Durch das Aufweiten beziehungsweise Vergrößern des Abstands zwischen den Fahrzeugen ist es möglich, dass das jeweilige, einzelne Fahrzeug seine eigene optimierte Fahrstrategie beispielsweise auf einem das Streckenprofil aufweisenden Streckenabschnitt umsetzen kann, insbesondere zeitlich und/oder räumlich begrenzt, sodass der Energieverbrauch des jeweiligen, einzelnen Fahrzeugs und somit der Energieverbrauch der Fahrzeugkolonne insgesamt gering gehalten werden kann. Das erfindungsgemäße Verfahren verknüpft somit die Vorteile einer Fahrzeugkolonne, welche auch einfach als Kolonne bezeichnet wird, mit den Vorteilen von unterschiedlichen Betriebsstrategien zum Bewegen der einzelnen Fahrzeuge der Kolonne, sodass trotz des Fahrens der Fahrzeuge in der Kolonne eine energetische Optimierung der einzelnen Fahrzeuge erfolgen kann, wobei diese energetische Optimierung für die gesamte Kolonne genutzt werden kann, sodass im Vergleich zum Stand der Technik eine weitere Verbesserung des Energieverbrauchs bei Kolonnenfahrt erreicht werden kann.

Eine weitere Ausführungsform zeichnet sich dadurch aus, dass die Fahrzeugkolonne wenigstens ein dem ersten Fahrzeug vorwegfahrendes, drittes Fahrzeug aufweist, sodass also das erste Fahrzeug dem dritten Fahrzeug folgt. Ferner weist die Fahrzeugkolonne wenigstens ein dem zweiten Fahrzeug folgendes, viertes Fahrzeug auf, sodass das zweite Fahrzeug dem vierten Fahrzeug vorwegfährt. Die vorigen und folgenden Ausführungen zum ersten Fahrzeug und zum zweiten Fahrzeug können ohne weiteres auch auf das dritte Fahrzeug und das vierte Fahrzeug übertragen werden. Somit werden beispielsweise das erste Fahrzeug und das dritte Fahrzeug beziehungsweise das zweite Fahrzeug und das vierte Fahrzeug auf Basis der der Fahrzeugkolonne zugeordneten, vorgebbaren Gesamtbetriebsstrategie zumindest vorübergehend in einen vorgebbaren, gleichbleibenden Abstand zueinander entlang der Fahrstrecke bewegt. Alternativ oder zusätzlich ist es denkbar, dass für das jeweilige dritte Fahrzeug beziehungsweise vierte Fahrzeug in Abhängigkeit von dem vorausliegenden Streckenprofil eine jeweilige Einzelbetriebsstrategie vorgegeben wird, wobei sich die Einzelbetriebsstrategien der Fahrzeuge voneinander unterscheiden.

Im Rahmen eines fünften Schritts ist es vorgesehen, dass das erste Fahrzeug und das dritte Fahrzeug beim Bewegen entlang des Streckenprofils eine erste Teilkolonne bilden, in welcher das erste Fahrzeug und das zweite Fahrzeug mit einem zweiten Abstand zueinander entlang des Streckenprofils bewegt werden. Ferner ist vorzugsweise ein sechster Schritt vorgesehen, bei welchem das zweite Fahrzeug und das vierte Fahrzeug beim Befahren des Streckenprofils beziehungsweise beim Bewegen entlang des Streckenprofils eine zweite Teilkolonne bilden, in welcher das zweite Fahrzeug und das vierte Fahrzeug mit einem dritten Abstand zueinander entlang des Streckenprofils bewegt werden. Die erste Teilkolonne ist beispielsweise ein zuvor erwähnter, erster Unter- oder Kleinverband, welcher zumindest das erste und das dritte Fahrzeug umfasst. Die zweite Teilkolonne ist beispielsweise ein zuvor erwähnter zweiter Klein- oder Unterverband, welcher zumindest das zweite und das vierte Fahrzeug umfasst. Ferner ist es vorzugsweise vorgesehen, dass zumindest nach dem Vergrößern des ersten Abstands und vorzugsweise vor dem Zurücklegen des Streckenprofils beziehungsweise vor dem dritten Zeitpunkt der erste Abstand größer als der zweite Abstand und größer als der dritte Abstand ist. Das erste Fahrzeug ist beispielsweise das in Fahrtrichtung letzte Fahrzeug der ersten Teilkolonne, wobei beispielsweise das zweite Fahrzeug das Führungsfahrzeug der zweiten Teilkolonne ist, sodass zwischen dem ersten Fahrzeug und dem zweiten Fahrzeug beispielsweise kein weiteres Fahrzeug der Fahrzeugkolonne fährt. Die Teilkolonnen sind somit um den ersten Abstand zwischen dem ersten Fahrzeug und dem zweiten Fahrzeug voneinander beabstandet.

Innerhalb der ersten Teilkolonne ist das dritte Fahrzeug um den zweiten Abstand von dem ersten Fahrzeug beabstandet. Innerhalb der zweiten Teilkolonne ist das zweite Fahrzeug um den dritten Abstand von dem vierten Fahrzeug beabstandet. Während des jeweiligen Bewegens der jeweiligen Teilkolonne entlang des Streckenprofils und nach dem Vergrößern des ersten Abstands ist der erste Abstand größer als der zweite Abstand und dritte Abstand. Dabei ist es beispielsweise vorgesehen, dass die erste Teilkolonne auf Basis der ersten Einzelbetriebsstrategie entlang des Streckenprofils bewegt wird, wobei die zweite Teilkolonne auf Basis der von der ersten Einzelbetriebsstrategie unterschiedlichen, zweiten Einzelbetriebsstrategie entlang des Streckenprofils bewegt wird. Somit ist es beispielsweise denkbar, die jeweiligen Fahrzeuge der jeweiligen Teilkolonne auf gleiche beziehungsweise analoge Weise entlang des Streckenprofils zu bewegen, jedoch werden die Teilkolonnen in Relation zueinander auf unterschiedliche Weise, insbesondere mit unterschiedlichen Geschwindigkeiten, entlang des Streckenprofils bewegt. Dadurch kann der Gesamtenergieverbrauch besonders gering gehalten werden.

Um den Energieverbrauch besonders gering zu halten, während die Teilkolonnen entlang des Streckenprofils bewegt werden, ist es vorzugsweise vorgesehen, dass der zweite Abstand und/oder der dritte Abstand zumindest während des Bewegens der jeweiligen Teilkolonnen entlang des Streckenprofils zumindest im Wesentlichen gleich bleibt.

Als weiterhin besonders vorteilhaft hat es sich gezeigt, wenn nach Zurücklegen des Streckenprofils und nach dem Verkleinern des ersten Abstands dieser dem zweiten Abstand und dem dritten Abstand entspricht. Mit anderen Worten ist es beispielsweise vorgesehen, die Teilkolonnen, das heißt das erste, zweite, dritte und vierte Fahrzeug nach dem Zurücklegen des Streckenprofils auf Basis der Gesamtbetriebsstrategie zu bewegen, insbesondere zu regeln und zu steuern, wobei vorzugsweise vorgesehen ist, die wenigstens vier Fahrzeuge der Fahrzeugkolonne derart zu bewegen, dass die Fahrzeuge paarweise den gleichen Abstand zueinander aufweisen. Dadurch kann die Fahrzeugkolonne insgesamt besonders energiegünstig bewegt werden.

Eine weitere Ausführungsform zeichnet sich dadurch aus, dass die jeweilige Einzelbetriebsstrategie und/oder die Gesamtbetriebsstrategie in Abhängigkeit von einem jeweiligen Gewicht des Fahrzeugs ermittelt werden. Weist eines der Fahrzeuge beispielsweise ein besonders hohes Gewicht auf, so kann dieses Gewicht beispielsweise bei einem Gefälle genutzt werden, um mit einem nur geringen Energieaufwand eine hohe Geschwindigkeit des Fahrzeugs zu erzeugen. Da vor dem Erreichen des Streckenprofils der erste Abstand vergrößert wird, kann dieses Fahrzeug aufgrund seines hohen Gewichts auf eine hohe Geschwindigkeit gebracht werden, ohne von einem vorausfahrenden Fahrzeug der Fahrzeugkolonne beeinträchtigt zu werden.

Alternativ oder zusätzlich ist es vorgesehen, dass die jeweilige Einzelbetriebsstrategie und/oder die Gesamtbetriebsstrategie in Abhängigkeit von wenigstens einem eine Reibleistung des jeweiligen Fahrzeugs charakterisierenden Reibleistungswert und/oder in Abhängigkeit von einem jeweiligen Fahrwiderstand des jeweiligen Fahrzeugs ermittelt werden. Hierdurch können jeweilige, individuelle Randbedingungen beziehungsweise Zustände oder Voraussetzungen der Fahrzeuge berücksichtigt werden, um eine besonders energieeffiziente, jeweilige Einzelbetriebsstrategie zu realisieren, sodass diese jeweilige, energetisch optimierte Einzelbetriebsstrategie zur Realisierung einer besonders effizienten Gesamtbetriebsstrategie genutzt werden kann.

Als weiterhin besonders vorteilhaft hat es sich gezeigt, wenn die jeweilige Einzelbetriebsstrategie und/oder die Gesamtbetriebsstrategie in Abhängigkeit von Windverhältnissen in der Umgebung des jeweiligen Fahrzeugs ermittelt werden. Beispielsweise können Informationen über die Windverhältnisse beziehungsweise Windverhältnisse selbst mittels wenigstens eines Sensors des jeweiligen Fahrzeugs ermittelt und/oder aus einem Computernetzwerk abgerufen werden. Durch Berücksichtigung der Windverhältnisse kann die jeweilige Gesamtbetriebsstrategie und/oder Einzelbetriebsstrategie besonders vorteilhaft gestaltet werden, um einen energieeffizienten Betrieb zu realisieren.

Alternativ oder zusätzlich ist es vorgesehen, dass die jeweilige Einzelbetriebsstrategie und/oder die Gesamtbetriebsstrategie in Abhängigkeit von der Anzahl an Fahrzeugen der Fahrzeugkolonne und/oder in Abhängigkeit von einer jeweilige Länge des jeweiligen Fahrzeugs ermittelt wird. Hierdurch ist es beispielsweise besonders vorteilhaft möglich, jeweilige Randbedingungen beziehungsweise Voraussetzungen auszunutzen, um das jeweilige Fahrzeug besonders energieeffizient zu betreiben, ohne dass sich die Fahrzeuge der Fahrzeugkolonne gegenseitig beeinflussen.

Ferner hat es sich als besonders vorteilhaft gezeigt, wenn die jeweilige Einzelbetriebsstrategie und/oder die Gesamtbetriebsstrategie in Abhängigkeit von einer Verkehrssituation ermittelt werden. Informationen über die aktuelle Verkehrssituation können beispielsweise aus einem Computernetzwerk wie dem Internet, insbesondere drahtlos, abgerufen werden. Durch Berücksichtigung der Verkehrssituation kann die jeweilige Einzelbetriebsstrategie beziehungsweise Gesamtbetriebsstrategie besonders effizient gestaltet werden, wobei gleichzeitig die Gefahr einer Kollision mit anderen Verkehrsteilnehmern besonders gering gehalten werden kann.

In weiterer Ausgestaltung der Erfindung wird die Gesamtbetriebsstrategie und/oder die jeweilige Einzelbetriebsstrategie mittels einer Voraussimulation ermittelt, bei welcher vor dem Bewegen der Fahrzeugkolonne entlang des Streckenprofils das Bewegen der Fahrzeugkolonne entlang des Streckenprofils simuliert wird. Hierdurch ist es beispielsweise möglich, mittels der Voraussimulation einen Energiebedarf zum Bewegen der Fahrzeugkolonne entlang des Streckenprofils beziehungsweise wenigstens einen den Energiebedarf charakterisierenden Energiewert zu berechnen. Ferner ist es in der Folge möglich, den Energiebedarf beziehungsweise den Energiewert zu minimieren. Der Energiebedarf wird durch entsprechendes Ansteuern beziehungsweise Einstellen der Aktoren beeinflusst und kann dadurch minimiert werden, dass anhand der Voraussimulation, bevor die Fahrzeugkolonne das Streckenprofil tatsächlich erreicht, ermittelt beziehungsweise berechnet wird, auf welche Weise die Aktoren angesteuert werden müssen und somit auf welche Weise das jeweilige Fahrzeug entlang des Streckenprofils bewegt werden muss, um den Energiebedarf beziehungsweise Energieverbrauch besonders gering zu halten. Insbesondere wird die Voraussimulation mit einer Optimierung oder Heuristik verknüpft, wobei beispielsweise eine Abwägung zwischen aerodynamischem Vorteil durch geringe Abstände und kinematischem Vorteil durch größere Abstände erfolgt.

Schließlich hat es sich als besonders vorteilhaft gezeigt, wenn das vorausliegende Streckenprofil eine Steigung und/oder ein Gefälle und/oder eine Kurve und/oder eine Senke und/oder eine Kuppe umfasst, und weiter auch wenigstens ein Verkehrszeichen und/oder wenigstens eine Lichtsignalanlage und/oder eine Kreuzung umfassen kann. Hierdurch kann die Gesamtbetriebsstrategie beziehungsweise die Einzelbetriebsstrategie bedarfsgerecht und besonders vorteilhaft an das Streckenprofil angepasst werden, sodass ein besonders energieeffizienter Betrieb realisierbar ist.

Das jeweilige Fahrzeug weist beispielsweise eine Positioniereinrichtung auf, mittels welcher wenigstens eine Position des Fahrzeugs auf der Erde ermittelbar ist. Die Positioniereinrichtung nutzt dabei beispielsweise ein satellitengestütztes Positionierungssystem wie beispielsweise GPS (Global Positioning System), um beispielsweise die aktuelle Position des Fahrzeugs auf der Erde zu ermitteln. Dadurch ist es möglich, die aktuelle Position des jeweiligen Fahrzeugs in Relation zu dem Streckenprofil zu setzen. Beispielsweise weist ein Bereich beziehungsweise ein Abschnitt der Fahrstrecke das genannte Streckenprofil auf. Durch Ermittlung der Position des jeweiligen Fahrzeugs, insbesondere in Relation zum Streckenprofil, ist es möglich, die Gesamtbetriebsstrategie und/oder die jeweilige Einzelbetriebsstrategie vorzugeben beziehungsweise den ersten Abstand zu vergrößern, bevor die Fahrzeugkolonne den Abschnitt beziehungsweise das Streckenprofil tatsächlich erreicht.

Ferner ist es beispielsweise möglich, die ermittelte Position des Fahrzeugs auf eine Karte, insbesondere auf eine virtuelle Karte, der Umgebung des Fahrzeugs zu beziehen, um dadurch Einrichtungen entlang des vorausliegenden Streckenprofils zu ermitteln. Diese Einrichtungen sind beispielsweise in der Karte vermerkt. Bei diesen Einrichtungen handelt es sich beispielsweise um die zuvor genannten Elemente wie das Verkehrszeichen, die Lichtsignalanlage, die Kreuzung, die Steigung, das Gefälle, die Kuppe, die Senke und/oder die Kurve. Hierdurch kann die Gesamtbetriebsstrategie beziehungsweise die Einzelbetriebsstrategie an das Streckenprofil besonders gut angepasst werden, um beispielsweise unnötige Beschleunigungen und/oder Abbremsvorgänge des jeweiligen Fahrzeugs zu vermeiden. Insgesamt kann ein besonders energieeffizienter Betrieb realisiert werden.

Zur Erfindung gehört auch eine Vorrichtung, welche zum Durchführen des erfindungsgemäßen Verfahrens ausgebildet ist. Vorteile und vorteilhafte Ausgestaltungen des erfindungsgemäßen Verfahrens sind als Vorteile und vorteilhafte Ausgestaltungen der erfindungsgemäßen Vorrichtung anzusehen.
Die Vorrichtung umfasst beispielsweise die zuvor genannte Recheneinrichtung, mittels welcher die Aktoren ansteuerbar sind, um dadurch die Fahrzeugkolonne beispielsweise zu regeln oder zu steuern beziehungsweise die Fahrzeuge, insbesondere automatisch oder autonom, zu bewegen. Insbesondere ist die Vorrichtung dazu ausgebildet, die jeweiligen Antriebsstränge der Fahrzeuge entsprechend zu betreiben, um die Fahrzeuge anzutreiben und/oder abzubremsen, um dadurch die jeweilige Einzelbetriebsstrategie beziehungsweise die Gesamtbetriebsstrategie umzusetzen.

Das jeweilige Fahrzeug ist beispielsweise ein Kraftwagen, welcher wenigstens einen Antriebsmotor zum Antreiben des Kraftwagens umfasst. Bei dem Antriebsmotor handelt es sich beispielsweise um eine Verbrennungskraftmaschine. Alternativ oder zusätzlich ist es denkbar, dass es sich bei dem Antriebsmotor um einen Elektromotor handelt. Insbesondere ist es denkbar, dass das jeweilige Fahrzeug als Elektrofahrzeug oder Hybridfahrzeug ausgebildet ist. Insbesondere ist es denkbar, dass das jeweilige Fahrzeug ein Nutzfahrzeug ist. Das erfindungsgemäße Verfahren beziehungsweise die erfindungsgemäße Vorrichtung ist besonders vorteilhaft einsetzbar bei Nutzfahrzeugen, deren Wirtschaftlichkeit insbesondere von dem Energieverbrauch abhängt, wobei mittels des Verfahrens beziehungsweise mittels der Vorrichtung der Energieverbrauch des Nutzfahrzeugs besonders gering gehalten werden kann. Insbesondere bei Nutzfahrzeugen mit großen Abmessungen wirkt sich eine Kolonnenfahrt besonders positiv auf den Energieverbrauch aus, da insbesondere der Luftwiderstand der Nutzfahrzeuge durch die Kolonnenfahrt gering gehalten werden kann.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
- Fig. 1: eine schematische Darstellung einer Fahrzeugkolonne zum Veranschaulichen eines Verfahrens zum Bewegen, insbesondere Regeln oder Steuern, der Fahrzeugkolonne;
- Fig. 2: eine weitere schematische Darstellung der Fahrzeugkolonne zum Veranschaulichen einer ersten Ausführungsform des Verfahrens bei einem ersten Anwendungsfall;
- Fig. 3: eine weitere schematische Darstellung der Fahrzeugkolonne zum Veranschaulichen des Verfahrens gemäß einer zweiten Ausführungsform bei einem ersten Anwendungsfall;
- Fig. 4: eine weitere schematische Darstellung der Fahrzeugkolonne zum Veranschaulichen des Verfahrens gemäß einer dritten Ausführungsform bei dem ersten Anwendungsfall;
- Fig. 5: ein Diagramm zum Veranschaulichen des Verfahrens bei einem zweiten Anwendungsfall
- Fig. 6: ein Diagramm zum Veranschaulichen des Verfahrens bei einem dritten Anwendungsfall;
- Fig. 7: ein Diagramm zum Veranschaulichen des Verfahrens bei einem vierten Anwendungsfall; und
- Fig. 8: eine schematische Darstellung der Fahrzeugkolonne zum Veranschaulichen des Verfahrens.

In den Figuren sind gleiche oder funktionsgleiche Elemente mit gleichen Bezugszeichen versehen.

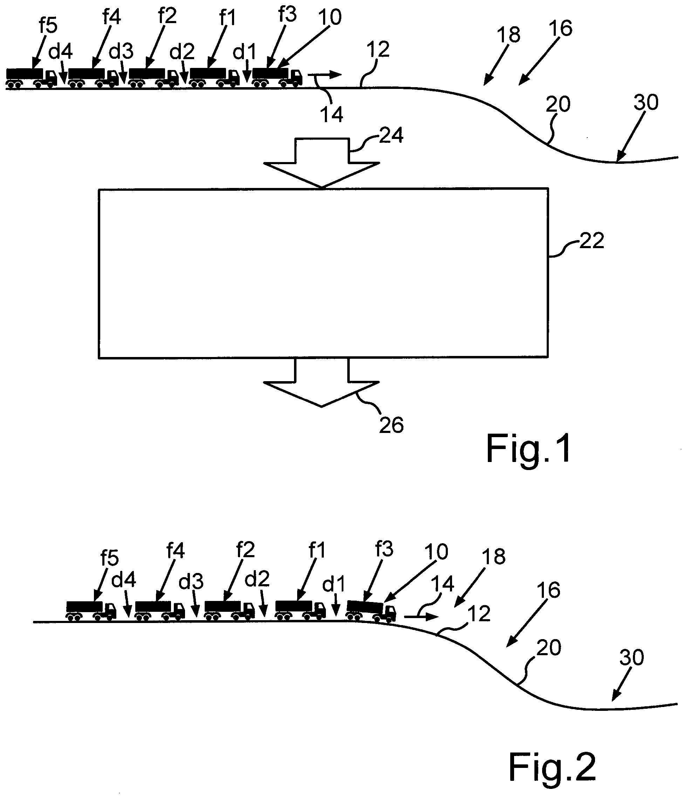

Fig. 1 zeigt in einer schematischen Seitenansicht eine im Ganzen mit 10 bezeichnete Fahrzeugkolonne, welche auch als Kolonne bezeichnet wird ein erstes Fahrzeug f1 und wenigstens ein dem ersten Fahrzeug f1 folgendes zweites Fahrzeug f2 aufweist. Aus Fig. 1 ist erkennbar, dass die Fahrzeugkolonne 10 vorliegend genau fünf Fahrzeuge umfasst, sodass zusätzlich zu dem ersten Fahrzeug f1 und dem zweiten Fahrzeug f2 ein drittes Fahrzeug f3, ein viertes Fahrzeug f4 und ein fünftes Fahrzeug f5 Fahrzeuge der Fahrzeugkolonne 10 sind. Die Fahrzeugkolonne 10 wird gebildet, indem die Fahrzeuge f1-5 in einer Kolonne entlang einer Fahrstrecke 12 bewegt, das heißt gefahren werden. Mit anderen Worten wird eine Kolonnenfahrt der Fahrzeuge f1-5 durchgeführt. Im Rahmen der Fahrzeugkolonne 10 beziehungsweise der Kolonnenfahrt werden die Fahrzeuge f1-5 hintereinander beziehungsweise aufeinanderfolgend bewegt, insbesondere in eine in Fig. 1 durch einen Pfeil 14 veranschaulichte Fahrtrichtung der Fahrzeugkolonne 10.

Aus Fig. 1 ist erkennbar, dass die Fahrzeuge f1-5 vorliegend Kraftwagen in Form von Nutzfahrzeugen beziehungsweise Nutzkraftwagen sind. Dabei umfasst das jeweilige Fahrzeug f1-5 einen in den Fig. nicht näher dargestellten Antriebsstrang zum Antreiben und Abbremsen des jeweiligen Fahrzeugs f1-5. Der Antriebsstrang umfasst beispielsweise wenigstens einen Antriebsmotor zum Antreiben des jeweiligen Fahrzeugs f1-5, wobei der Antriebsmotor beispielsweise als Verbrennungskraftmaschine oder Elektromotor ausgebildet sein kann. Insbesondere ist es denkbar, dass das jeweilige Fahrzeug f1-5 als Hybridfahrzeug ausgebildet ist und dabei als Antriebsmotoren wenigstens eine Verbrennungskraftmaschine und wenigstens eine elektrische Maschine umfasst. Ferner kann der jeweilige Antriebsstrang ein Getriebe umfassen, welches jeweils eine Mehrzahl von einlegbaren beziehungsweise schaltbaren Gängen aufweist. Ferner umfasst der Antriebsstrang beispielsweise wenigstens eine Bremsanlage zum Abbremsen und somit Verzögern des jeweiligen Fahrzeugs f1-5. Ferner ist es vorgesehen, dass der jeweilige Antriebsstrang Aktoren umfasst, mittels welchen jeweilige Komponenten des Antriebsstrangs betätigbar beziehungsweise bedienbar sind. Bei den genannten Komponenten handelt es sich beispielsweise um den zuvor genannten Antriebsmotor beziehungsweise die zuvor genannten Antriebsmotoren, das Getriebe und/oder die Bremsanlage.

Im Folgenden wird ein Verfahren zum Bewegen, insbesondere zum Regeln oder Steuern, der Fahrzeugkolonne beschrieben. Im Rahmen des Verfahrens wird die Fahrzeugkolonne 10 beispielsweise mittels einer in den Fig. nicht dargestellten Recheneinrichtung, insbesondere einer elektronischen Recheneinrichtung, bewegt, das heißt gesteuert oder geregelt. Mit anderen Worten werden die Fahrzeuge f1-5 der Fahrzeugkolonne 10 mittels der Recheneinrichtung bewegt, insbesondere gesteuert, sodass die Fahrzeugkolonne 10 beziehungsweise die Fahrzeuge f1-5 mittels der Recheneinrichtung beispielsweise automatisch beziehungsweise automatisiert oder autonom bewegt werden. Somit wird beispielsweise die zuvor genannte Kolonnenfahrt der Fahrzeuge f1-5 mittels der Recheneinrichtung, insbesondere autonom oder automatisch, durchgeführt. Hierzu steuert die Recheneinrichtung beispielsweise die zuvor genannten Aktoren an, wodurch der jeweilige Antriebsstrang mittels der Recheneinrichtung über die jeweiligen Aktoren, insbesondere automatisch oder autonom, betrieben werden kann. Auf diese Weise ist es beispielsweise möglich, dass mittels der Recheneinrichtung jeweilige Antriebskräfte beziehungsweise Antriebsmomente zum Antreiben beziehungsweise Beschleunigen der jeweiligen Fahrzeuge f1-5 und/oder Bremskräfte beziehungsweise Bremsmomente zum jeweiligen Abbremsen der jeweiligen Fahrzeuge f1-5 mittels der Recheneinrichtung über die jeweiligen Aktoren, insbesondere automatisch oder autonom, einstellbar beziehungsweise bewirkbar sind.

Somit erfolgt beispielsweise mittels der Recheneinrichtung über die Aktoren eine Längsdynamikregelung der jeweiligen Fahrzeuge f1-5, wobei diese Längsdynamikregelung mittels der Recheneinrichtung automatisch oder autonom erfolgen kann. Unter einer solchen Längsdynamikregelung ist zu verstehen, dass mittels der Recheneinrichtung über die Aktoren jeweilige Geschwindigkeiten und somit beispielsweise jeweilige Beschleunigungen und/oder Abbremsvorgänge zur Realisierung der jeweiligen Geschwindigkeiten, insbesondere automatisch oder autonom, bewirkt werden. Dadurch ist es beispielsweise möglich, jeweilige Geschwindigkeiten der jeweiligen Fahrzeuge f1-5 ohne Zutun eines jeweiligen Fahrers des jeweiligen Fahrzeugs f1-5 zu bewirken. Dadurch ist es beispielsweise möglich, die Fahrzeuge f1-5 mit jeweiligen, besonders geringen Abständen zueinander entlang der Fahrstrecke 12, insbesondere mittels der Recheneinrichtung, zu bewegen und dabei gleichzeitig eine besonders sichere Kolonnenfahrt zu realisieren, das heißt die Wahrscheinlichkeit von Unfällen gering zu halten, da beispielsweise die Fahrer der Fahrzeuge f1-5, insbesondere deren Reaktionszeiten, als potentielle Unfallgefahren beziehungsweise Unfallquellen ausgeschlossen werden können.

Die genannte Recheneinrichtung zum Durchführen des Verfahrens umfasst beispielsweise jeweilige Recheneinrichtungen, insbesondere elektronische Recheneinrichtungen wie beispielsweise Steuergeräte, der Fahrzeuge f1-5, wobei diese Steuergeräte beispielsweise Daten austauschen, um das Verfahren und somit die Kolonnenfahrt zu realisieren, das heißt durchzuführen. Alternativ oder zusätzlich ist es denkbar, dass die Recheneinrichtung wenigstens eine bezogen auf die Fahrzeuge f1-5 externe Recheneinheit, insbesondere elektronische Recheneinheit, wie beispielsweise einen Server umfasst, wobei die externe Recheneinheit beispielsweise mit den Fahrzeugen f1-5, insbesondere drahtlos, kommuniziert, Daten austauscht. Ferner kann die Recheneinrichtung genau eine Recheneinrichtung zumindest eines der Fahrzeuge f1-5 umfassen. Eine Fahrzeugkolonne umfasst wenigstens zwei Fahrzeuge, welche hintereinander beziehungsweise aufeinanderfolgend entlang einer Fahrstrecke bewegt werden. Der besseren Übersichtlichkeit wegen wird das Verfahren an entsprechenden Stellen im Folgenden grundsätzlich anhand des ersten Fahrzeugs f1 und des zweiten Fahrzeugs f2 beschrieben, falls nichts anderes angegeben ist.

Im Rahmen des Verfahrens werden die Fahrzeuge f1-5 der Fahrzeugkolonne 10 auf Basis einer der Fahrzeugkolonne 10 insgesamt zugeordneten, vorgebbaren Gesamtbetriebsstrategie zumindest vorübergehend in einem jeweiligen, vorgebbaren, gleichbleibenden Abstand d1-4 zueinander entlang der Fahrstrecke 12 bewegt. Dabei sind die Abstände d1-4 zumindest vorübergehend gleich und besonders gering, sodass der Luftwiderstand gering gehalten werden kann. Dadurch kann ein besonders energieeffizienter Betrieb der jeweiligen Fahrzeuge f1-5 und somit der Fahrzeugkolonne 10 insgesamt realisiert werden. Die Gesamtbetriebsstrategie wird beispielsweise von der Recheneinrichtung vorgegeben. Hierzu wird beispielsweise die Gesamtbetriebsstrategie mittels der Recheneinrichtung ermittelt beziehungsweise berechnet und schließlich vorgegeben. Der erste Abstand d1-5 ist dabei Bestandteil der Gesamtbetriebsstrategie.

Wie im Folgenden noch genauer erläutert wird, ist es zur Realisierung einer besonders energieeffizienten und somit energieverbrauchsarmen, insbesondere kraftstoffverbrauchsarmen, Fahrt der Fahrzeugkolonne 10 entlang der Fahrstrecke 12 nun vorgesehen, dass zumindest für zwei der Fahrzeuge f1-5 der Fahrzeugkolonne 10, beispielsweise für das erste Fahrzeug f1 und für das zweite Fahrzeug f2, in Abhängigkeit von einem der Fahrzeugkolonne 10 vorausliegenden Streckenprofil 16 der Fahrstrecke 12 eine jeweilige Einzelbetriebsstrategie vorgegeben wird, wobei sich die Einzelbetriebsstrategien voneinander unterscheiden. Dies bedeutet, dass mittels der Recheneinrichtung für das erste Fahrzeug f1 eine erste Einzelbetriebsstrategie und für das zweite Fahrzeug f2 eine von der ersten Einzelbetriebsstrategie unterschiedliche, zweite Einzelbetriebsstrategie ermittelt beziehungsweise berechnet und vorgegeben wird, sodass das erste Fahrzeug f1 auf Basis der ersten Einzelbetriebsstrategie und das zweite Fahrzeug f2 auf Basis der zweiten Einzelbetriebsstrategie nach dem Ermitteln und Vorgeben der jeweiligen Einzelbetriebsstrategie entlang des Streckenprofils 16 bewegt, das heißt gefahren wird. Die Einzelbetriebsstrategien unterscheiden sich beispielsweise hinsichtlich ihrer Geschwindigkeitsprofile beziehungsweise Geschwindigkeitstrajektorien für die jeweiligen Fahrzeuge f1 und f2, sodass die jeweiligen Fahrzeuge f1 und f2 beispielsweise mit voneinander unterschiedlichen Geschwindigkeiten entlang des Streckenprofils 16 bewegt werden. Darunter ist zu verstehen, dass die jeweiligen Fahrzeuge f1 und f2 aufgrund der unterschiedlichen Einzelbetriebsstrategien an zumindest einem Punkt des Streckenprofils 16 unterschiedliche Geschwindigkeiten aufweisen.

Fig. 1 bis 4 veranschaulichen einen ersten Anwendungsfall, bei welchem das Verfahren eingesetzt wird. Bei diesem ersten Anwendungsfall weist der vorausliegende Streckenabschnitt 16 eine Kuppe 18 auf, an die sich ein Gefälle 20 anschließt. Die Fahrzeugkolonne 10 nähert sich somit zunächst der Kuppe 18 und somit dem ersten Anwendungsfall, wobei beispielsweise auf Basis eines Vorausschauhorizonts ermittelt wird, dass das vorausliegende Streckenprofil 16 die Kuppe 18 aufweist. Dies bedeutet, dass mittels der Recheneinrichtung ermittelt wird, dass der Fahrzeugkolonne 10 das Streckenprofil 16 und somit die Kuppe 18 vorausliegen, bevor die Fahrzeugkolonne 10 das Streckenprofil 16, das heißt die Kuppe 18, tatsächlich erreicht. Dies ist insbesondere beispielsweise dadurch möglich, dass die Fahrzeuge f1-5 jeweilige Positioniereinrichtungen umfassen, wobei mittels der jeweiligen Positioniereinrichtung wenigstens eine jeweilige Position des jeweiligen Fahrzeugs f1-5 auf der Erde erfasst werden kann. Hierzu nutzt die jeweilige Positioniereinrichtung beispielsweise ein satellitengestütztes Navigationssystem wie beispielsweise GPS (Global Positioning System). Durch das Ermitteln der jeweiligen Position des jeweiligen Fahrzeugs f1-5 ist es möglich, das jeweilige Fahrzeug f1-5, insbesondere dessen Position, in Relation zur Umgebung der Fahrzeugkolonne 10 und somit in Relation zur Fahrstrecke 20 zu setzen, um dadurch zu ermitteln, dass das Streckenprofil 16 und somit die Kuppe 18 der Fahrzeugkolonne 10 vorausliegt.

Insbesondere in Abhängigkeit von einer aktuellen Geschwindigkeit, mittels welcher die Fahrzeugkolonne 10 entlang der Fahrstrecke 12 bewegt wird, kann ermittelt werden, zu welcher Zeit beziehungsweise in welcher Zeitspanne die Fahrzeugkolonne 10 ausgehend von einem ersten Zeitpunkt das Streckenprofil 16 erreichen wird. Beispielsweise erreicht die Fahrzeugkolonne 10 das Streckenprofil 16 zu einem zeitlich auf den ersten Zeitpunkt folgenden, zweiten Zeitpunkt. Nach Erreichen des Streckenprofils 16 wird die Fahrzeugkolonne 10 entlang des Streckenprofils 16 bewegt, sodass die Fahrzeugkolonne 10 das Streckenprofil 16 befährt beziehungsweise zurücklegt. Nach Zurücklegen beziehungsweise Befahren des Streckenprofils 16, das heißt nach dem die Fahrzeugkolonne 10 entlang des Streckenprofils 16 bewegt wurde, liegt das Streckenprofil 16 zu einem auf dem zweiten Zeitpunkt zeitlich folgenden dritten Zeitpunkt hinter der Fahrzeugkolonne 10, sodass die Fahrzeugkolonne 10 zu dem dritten Zeitpunkt das Streckenprofil 16 zurückgelegt beziehungsweise befahren hat.

Nähert sich die Fahrzeugkolonne 10 vorliegend dem ersten Anwendungsfall, das heißt der Kuppe 18, wird beispielsweise mit einer Betriebsstrategieeinheit 22 der Recheneinrichtung eine vorteilhafte oder optimale Formation und/oder eine vorteilhafte oder optimale Fahrtrajektorie für die Fahrzeugkolonne 10 ermittelt. Hierunter ist zu verstehen, dass die Formation und die Fahrtrajektorie derart ermittelt werden, dass eine energieoptimale, das heißt eine energieeffiziente Befahrung des Streckenprofils 16 und vorliegend der Kuppe 18 möglich ist. Die genannte Fahrtrajektorie umfasst beispielsweise Parameter, welche das Befahren des Streckenprofils 16 charakterisieren. Ein solcher Parameter ist beispielsweise die Geschwindigkeit, mit welcher die Fahrzeugkolonne 10 beziehungsweise das jeweilige Fahrzeug f1-5 entlang des Streckenprofils 16 bewegt wird beziehungsweise werden. Alternativ oder zusätzlich kann es sich bei den Parametern um ein Antriebsmoment und/oder Bremsmoment und/oder eine Gangwahl handeln. Beispielsweise wird der jeweilige Parameter für jedes der Fahrzeuge f1-5 vorgegeben und somit auf die beschriebene Weise beispielsweise über die Recheneinrichtung der Aktoren eingestellt und somit bewirkt.

Die Betriebsstrategieeinheit 22 erhält Eingangsgrößen 24. Bei diesen Eingangsgrößen 24 handelt es sich beispielsweise um eine Soll-Geschwindigkeit der Fahrzeugkolonne 10, um die Abstände d1-4 beziehungsweise um jeweilige Werte, insbesondere Ist-Werte, der Abstände d1-4, um die Anzahl an Fahrzeugen der Fahrzeugkolonne 10, um die Art der Fahrzeuge f1-5, um die Länge des jeweiligen Fahrzeugs f1-5, um Windverhältnisse, insbesondere in der Umgebung der Fahrzeugkolonne 10, um eine Verkehrssituation beziehungsweise um eine Verkehrsdichte und/oder um einen Steigungshorizont. In Abhängigkeit von diesen Eingangsgrößen 24 wird beispielsweise die zuvor genannte Gesamtbetriebsstrategie und/oder die zuvor genannte, jeweilige Einzelbetriebsstrategie mittels der Recheneinrichtung, insbesondere mittels der Betriebsstrategieeinheit 22, berechnet und somit ermittelt. Zusammenfassend werden die Einzelbetriebsstrategien und die Gesamtbetriebsstrategie auch als Strategie oder Fahrstrategie bezeichnet.

Die jeweilige Fahrstrategie wird beispielsweise mittels der Methode der Voraussimulation insbesondere in Verbindung mit Optimierung oder Heuristik berechnet beziehungsweise ermittelt, wobei beispielsweise eine Abwägung zwischen aerodynamischem Vorteil durch kleine Abstände d1-4 und kinematischem Vorteil durch demgegenüber größere Abstände d1-4 erfolgt. Die Betriebsstrategie 22 stellt schließlich Ausgangsgrößen 26 bereit. Diese Ausgangsgrößen 26 sind beispielsweise die Einzelbetriebsstrategien und die Gesamtbetriebsstrategie, welche eine hinsichtlich des Energieverbrauchs optimale Formation der Fahrzeugkolonne 10 mit einer jeweiligen optimalen Fahrtrajektorie für jedes der Fahrzeuge f1-5 umfasst.

Fig. 2 veranschaulicht eine erste Ausführungsform des Verfahrens bei dem ersten Anwendungsfall. Charakterisieren die Eingangsgrößen 24 beispielsweise eine hohe Verkehrsdichte und/oder ungünstige Windverhältnisse und/oder eine lang gezogene großräumige Topografie des vorausliegenden Streckenprofils 16, so bleibt die Fahrzeugkolonne 10 als ganze Formation erhalten. Beispielsweise wird mittels der Betriebsstrategieeinheit 22 ermittelt, dass es hinsichtlich des Befahrens des vorausliegenden Streckenprofils 16, welches beispielsweise durch einen vorausliegenden Streckenabschnitt der Fahrstrecke 12 gebildet ist, energetisch am günstigsten ist, die Fahrzeugkolonne 10 als gesamten Verband beziehungsweise Kolonnenverband mit kleinen, zumindest im Wesentlichen konstanten Abständen d1-4 zusammenzuhalten und als Ganzes den ersten Anwendungsfall auszuführen. Hierzu wird beispielsweise zuvor, das heißt vor Befahren des Streckenprofils 16 der Gesamtschwerpunkt der Fahrzeugkolonne 10 bestimmt. Ferner werden beispielsweise die mittlere Rollfähigkeit und die Beladung über alle Fahrzeuge f1-5, welche Kolonnenteilnehmer sind, ermittelt, sodass daraus eine energetisch optimale Fahrtrajektorie vorliegend als Kuppentrajektorie für den einen Gesamtverband darstellenden Kolonnenverband bezogen auf den Gesamtschwerpunkt der Fahrzeugkolonne 10 berechnet wird. Diese Kuppentrajektorie wird dann auf die einzelnen Fahrzeuge f1-5 der Fahrzeugkolonne 10 heruntergebrochen, um schließlich die Fahrzeugkolonne 10 als Ganzes, das heißt als gesamten Kolonnenverband entlang des Streckenprofils 16 z bewegen.

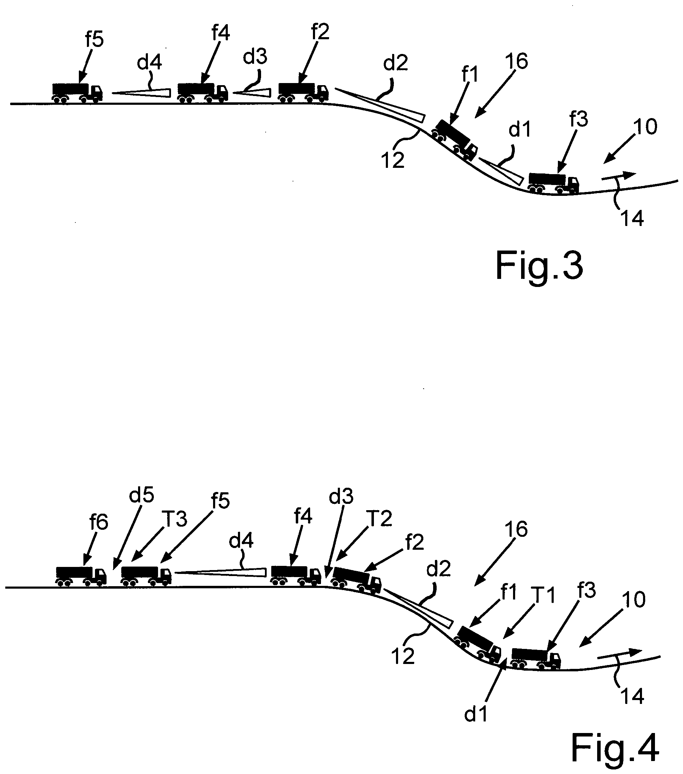

Fig. 3 zeigt eine zweite Ausführungsform des Verfahrens bei dem ersten Anwendungsfall. Zu der zweiten Ausführungsform kommt es beispielsweise dann, wenn anhand der Eingangsgrößen 24 ermittelt wird, dass eine niedrige Verkehrsdichte und/oder günstige Windverhältnisse, zum Beispiel Rückenwind, und/oder eine kleinräumige Topografie vorliegt beziehungsweise vorliegen. Wie im Folgenden noch näher erläutert wird, ist es bei der zweiten Ausführungsform vorgesehen, die Fahrzeugkolonne 10 aufzuweiten, sodass jedes Fahrzeug f1-5 seine eigene optimale Kuppentrajektorie ausführen kann.

Mit anderen Worten ist es bei der zweiten Ausführungsform wie zuvor beschrieben vorgesehen, beispielsweise für das Fahrzeug f1 und das Fahrzeug f2 in Abhängigkeit von dem Streckenprofil 16 die jeweilige Einzelbetriebsstrategie zu berechnen und vorzugeben. Im Rahmen der Gesamtbetriebsstrategie wird der Abstand d2 zwischen den Fahrzeugen f1 und f2 vergrößert, bevor die Fahrzeugkolonne 10 beziehungsweise die Fahrzeuge f1 und f2 das Streckenprofil 16 tatsächlich erreichen Daraufhin wird das jeweilige Fahrzeug f1 beziehungsweise f2 auf Basis der jeweiligen Einzelbetriebsstrategie entlang des Streckenprofils 16 und somit entlang der Kuppe 18 bewegt. Nach Zurücklegen des Streckenprofils 16 wird die Fahrzeugkolonne 10 insgesamt auf Basis der Gesamtbetriebsstrategie bewegt. Daher ist es beispielsweise vorgesehen, dass der Abstand 2 zwischen den Fahrzeugen f1 und f2 nach Zurücklegen des Streckenprofils 16 wieder verringert wird.

Diese zweite Ausführungsform insgesamt ist anhand der Fahrzeuge f1-5 veranschaulicht. Am Beispiel der Fahrzeuge f3 und f5 ist erkennbar, dass der Abstand d4 der Fahrzeuge f4 und f5 vergrößert wird bevor die Fahrzeuge f4 und f5 das Streckenprofil 16 erreichen. Der Abstand d4 zwischen den Fahrzeugen f4 und f5 wird vergrößert um dem dem Fahrzeug f5 vorausfahrenden Fahrzeug f4 und/oder dem dem Fahrzeug f4 folgenden Fahrzeug f5 das Durchführen der jeweiligen Einzelbetriebsstrategie beim Befahren der Kuppe 18 zu ermöglichen, ohne dass sich die Fahrzeuge f4 und f5 beeinträchtigen. Am Beispiel des Fahrzeugs f2 ist erkennbar, dass schließlich bei Erreichen des Streckenprofils 16 die jeweilige Einzelbetriebsstrategie umgesetzt wird. Ferner ist am Beispiel der Fahrzeuge f1 und f3 erkennbar, dass, insbesondere nach dem Befahren des Streckenprofils 16, und nachdem der Abstand d1 zwischen den Fahrzeugen f1 und f3 vor dem Erreichen des Streckenprofils 16 vergrößert wurde, das Fahrzeug f1 wieder zu seinem Vordermann, das heißt dem Fahrzeug f3 aufschließt, sodass der Abstand d1, welcher zuvor vergrößert wurde, dann verringert wird.

Zur zweiten Ausführungsform kommt es beispielsweise, da mittels der Betriebsstrategieeinheit 22 ermittelt wird, dass es energetisch am günstigsten ist, die Fahrzeugkolonne 10, das heißt den zuvor beschriebenen und einen Gesamtverband bildenden, gesamten Kolonnenverband zumindest vorübergehend, insbesondere zeitlich oder räumlich, aufzuweiten, um jedem Fahrzeug f1-5 ein individuelles Befahren, insbesondere Überrollen, der Kuppe 18 zu ermöglichen. Dadurch kann das jeweilige Fahrzeug f1-5 individuell besonders energiegünstig entlang des Streckenprofils 16 bewegt werden, sodass sich insgesamt ein energieeffizienter Betrieb der Fahrzeugkolonne 10 realisieren lässt.

Um dieses individuelle Befahren beziehungsweise Überrollen der Kuppe 18 zu ermöglichen, wird vor Erreichen der Kuppe 18 für jedes Fahrzeug f1-5 und somit für jeden Abstand d1-4 ein optimaler Wert bestimmt, insbesondere in Abhängigkeit von der jeweiligen Beladung und den jeweiligen Rolleigenschaften der jeweiligen Fahrzeuge f1-5. Dieser optimale Wert wird dann beispielsweise vorbereitend durch Ausrollen wenigstens eines der jeweils nachfolgenden Fahrzeuge f1, f2, f4 und f5 eingestellt, sodass zumindest einer der Abstände d1-4 vergrößert wird.

Nach der Kuppe 18, beispielsweise in dem sich an die Kuppe 18 anschließenden Gefälle 20 des Streckenprofils 16 und/oder in einer sich an das Gefälle 20 anschließenden Senke 30 des Streckenprofils 16 und/oder in einer Ebene des Streckenprofils 16 kann dann beispielsweise durch Ausrollen eine enge Kolonnenformation wieder eingenommen werden, in dem der wenigstens eine zuvor vergrößerte Abstand beziehungsweise die zuvor vergrößerten Abstände wieder reduziert werden, sodass die Abstände d1-4 nach dem Befahren des Streckenprofils 16 beispielsweise wieder den Abständen d1-4 vor dem Befahren des Streckenprofils 16 entsprechen beziehungsweise dass die Abstände d1-4 nach dem Streckenprofil 16 beispielsweise wieder gleich sind, denn es kann vorgesehen sein, dass die wenigstens zwei der Abstände d1-4 während des Befahrens des Streckenprofils 16 voneinander unterschiedlich sind und/oder dass die Abstände d1-4 vor dem Befahren des Streckenprofils 16 gleich sind. Insbesondere ist es denkbar, dass die Fahrzeuge f1-5 entlang des Streckenprofils 16 bewegt werden, während sich die jeweiligen Abstände d1-4 zwischen den jeweiligen Fahrzeugen f1-5 voneinander unterscheiden beziehungsweise wenn sich wenigstens zwei der Abstände d1-4 während des Befahrens des Streckenprofils 16 voneinander unterscheiden.

Fig. 4 veranschaulicht eine dritte Ausführungsform des Verfahrens bei dem ersten Anwendungsfall. Zur dritten Ausführungsform kommt es beispielsweise dann, wenn anhand der Eingangsgrößen 24 ermittelt wird, dass eine mittlere Verkehrsdichte und/oder entsprechende Windverhältnisse und/oder eine mittlere Topografie des Streckenprofils 16 vorliegt beziehungsweise vorliegen. Im Rahmen der dritten Ausführungsform wird die Fahrzeugkolonne 10 in Teilkolonnen T1, T2 und T3 aufgeteilt, wobei die Teilkolonne T1 die Fahrzeuge f1 und f3, die Teilkolonne T2 die Fahrzeuge f2 und f4 und die Teilkolonne T3 das Fahrzeug f5 und ein sechstes Fahrzeug f6 der Fahrzeugkolonne 10 umfasst.

Bezogen auf die gesamte Fahrzeugkolonne 10 bildet das Fahrzeug f3 das Führungsfahrzeug, dem die übrigen Fahrzeuge f1, f2, f4, f5 und f6 folgen. Mit anderen Worten ist das Führungsfahrzeug das in Fahrtrichtung erste Fahrzeug der Fahrzeugkolonne 10. Bezogen auf die Teilkolonne T1 bildet das Fahrzeug f3 das Führungsfahrzeug. Bezogen auf die Teilkolonne T2 bildet das Fahrzeug f2 das Führungsfahrzeug und bezogen auf die Teilkolonne T3 bildet das Fahrzeug f5 das Führungsfahrzeug. Zwischen den Fahrzeugen f1 und f3 der Teilkolonne T1 ist der Abstand d2 vorgesehen, zwischen den Fahrzeugen f2 und f4 der Teilkolonne T2 ist der Abstand d3 vorgesehen und zwischen den Fahrzeugen f5 und f6 der Teilkolonne T3 ist ein Abstand d5 vorgesehen. Ferner ist zwischen den Teilkolonnen T1 und T2 der Abstand d2 vorgesehen, wobei zwischen den Teilkolonnen T2 und T3 der Abstand d4 vorgesehen ist.

Dabei sind die Abstände d2 und d4 größer als die Abstände d1, d3 und d5. Beispielsweise können die Abstände d2 und d4 gleich sein. Ferner ist es denkbar, dass die Abstände d1, d2 und/oder d5 gleich sind. Aus Fig. 4 ist erkennbar, dass bei der dritten Ausführungsform die Teilkolonne T3 den Abstand zur Teilkolonne T2 vergrößert, um den Teilkolonnen T2 und T3 den ersten Anwendungsfall beziehungsweise die Durchführung des ersten Anwendungsfalls zu ermöglichen, ohne dass es zu einer gegenseitigen Beeinträchtigung kommt. Am Beispiel der Teilkolonne T2 ist erkennbar, dass die Teilkolonne T2 den ersten Anwendungsfall umsetzt. Im Rahmen der dritten Ausführungsform wird beispielsweise mittels der Betriebsstrategieeinheit 22 ermittelt, dass es energetisch am günstigsten ist, den gesamten Kolonnenverband in die Teilkolonnen T1, T2, und T3 zumindest vorübergehend aufzuweiten, insbesondere zeitlich und/oder räumlich begrenzt, um jeder Teilkolonne T1-3 ein individuelles Überrollen der Kuppe 18 zu ermöglichen.

Beispielsweise werden die jeweiligen Fahrzeuge f1 und f3 beziehungsweise f2 und f4 beziehungsweise f5 und f6 der jeweiligen Teilkolonne T1 beziehungsweise T2 beziehungsweise T3 mit der jeweils gleichen Einzelbetriebsstrategie entlang des Streckenprofils 16 bewegt, wobei sich beispielsweise die Einzelbetriebsstrategien der Teilkolonne T1 von den Einzelbetriebsstrategien der Teilkolonne T2 und/oder von den Einzelbetriebsstrategien der Teilkolonne T3 unterscheiden. Zur Realisierung der dritten Ausführungsform wird beispielsweise vor der Kuppe 18 für jedes Fahrzeug f1-f6 der optimale Abstand beziehungsweise ein jeweiliger optimaler Wert für den jeweiligen Abstand d1-6 bestimmt, insbesondere in Abhängigkeit von der Beladung und den Rolleigenschaften. Dieser optimale Wert wird dann beispielsweise vorbereitend durch Ausrollen der jeweils nachfolgenden Fahrzeuge f1, f2, f4, f5 und f6 eingestellt. Nach dem Streckenprofil 16 beziehungsweise nach der Kuppe 18, beispielsweise im anschließenden Gefälle 20 oder in der Senke 30 oder in der Ebene, wird die zuvor eingestellte, enge Kolonnenformation wieder eingenommen.

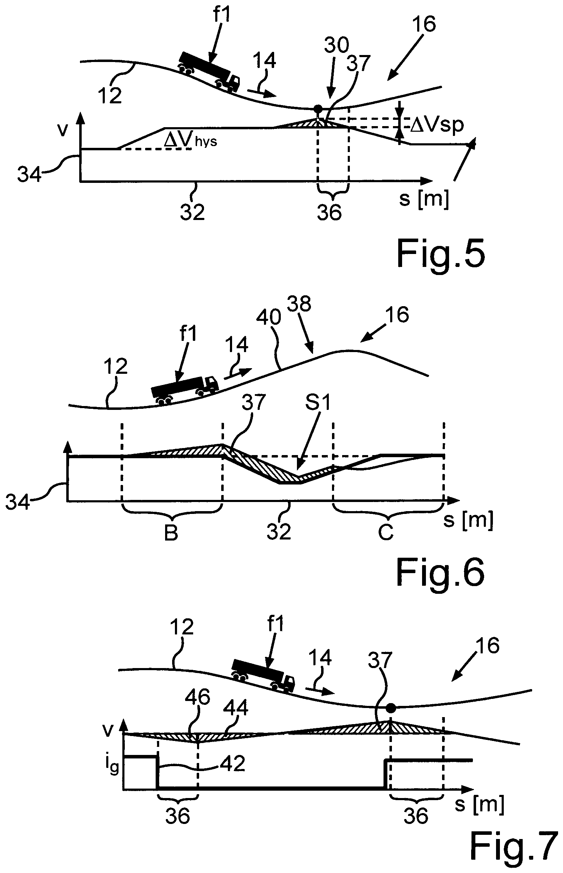

Das beschriebene Verfahren, insbesondere die Ausführungsformen, lässt beziehungsweise lassen sich auch auf andere Anwendungsfälle übertragen. Fig. 5 zeigt einen zweiten Anwendungsfall, bei welchem es sich um die Senke 30 handelt, sodass - wie am Beispiels des Fahrzeugs f1 veranschaulicht ist-die Fahrzeugkolonne 10 beispielsweise mittels des Verfahrens entlang der Senke 30 beziehungsweise durch diese bewegt wird. Dabei zeigt Fig. 5 ein Diagramm, auf dessen Abszisse 32 der Weg s, insbesondere in der Einheit Meter [m], aufgetragen ist, wobei auf der Ordinate 34 des Diagramms die Geschwindigkeit v des jeweiligen Fahrzeugs f1-5 aufgetragen ist. In Fig. 5 bezeichnen Δv_{hys} und Δvₛₚ Geschwindigkeitsunterschiede, welche mittels des Verfahrens bewirkt werden können. Ferner ist in Fig. 5 ein Kraftstoffverbrauchsvorteil 36 eingetragen, welcher sich durch Anwenden des Verfahrens beispielsweise gegenüber einem durch den Fahrer des Fahrzeugs f1 bewirkten Befahren der Senke 30 realisieren lässt. Ferner ist in Fig. 5 mit 37 ein durch das Verfahren realisierbarer Zeitgewinn dargestellt.

Fig. 6 zeigt einen dritten Anwendungsfall, bei welchem es sich um einen steilen Berg 38 und somit einen steilen Anstieg 40 des Streckenprofils 16 handelt. Auch Fig. 6 zeigt das Diagramm mit der Abszisse 32 und der Ordinate 34. In einem Bereich B erfolgt eine vorausschauende Beschleunigung des Fahrzeugs f1 mittels des Verfahrens, woraus der Zeitgewinn 37 resultiert. In einem auf den Bereich B folgenden Bereich C erfolgt ein Segelbetrieb beziehungsweise ein Schubbetrieb, sodass Kraftstoff eingespart werden kann. Ferner erfolgt an einer Stelle S1 eine Einsparung eines Gangwechsels, insbesondere im Vergleich zu einem von dem Fahrer des Fahrzeugs f1 bewirkten Durchfahren der Senke 30.

Ferner zeigt Fig. 7 einen vierten Anwendungsfall, bei welchem ein vorausschauender Rollbetrieb durchgeführt wird. In das Diagramm ist ein Verlauf 42 eingetragen, welcher eine Übersetzung i_{g} des Getriebes des Fahrzeugs f1 und somit Gangwechsel des Getriebes veranschaulicht. Ferner veranschaulicht ein Verlauf 44 die Geschwindigkeit des Fahrzeugs f1. Bei dem vierten Anwendungsfall kommt es zunächst zwar zu einem Zeitverlust 46, welcher jedoch durch den Zeitgewinn 37 zumindest kompensiert wird. Der Vorteil des Verfahrens bei dem vierten Anwendungsfall sind vor allem Kraftstoffverbrauchseinsparungen 36.

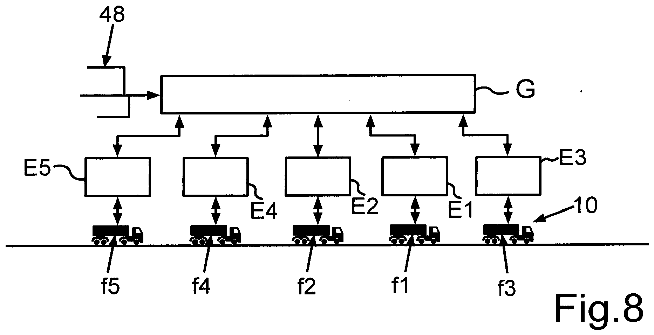

Fig. 8 zeigt schließlich eine weitere schematische Darstellung der Fahrzeugkolonne 10 zum Veranschaulichen des Verfahrens insgesamt. Die jeweiligen Einzelbetriebsstrategien sind in Fig. 8 mit E1, E2, E3, E4 und E5 bezeichnet. Ferner ist die Gesamtbetriebsstrategie mit G bezeichnet. Aus Fig. 8 ist besonders gut erkennbar, dass die jeweiligen Fahrzeuge f1-5 zwar auf Basis der jeweiligen, individuellen Einzelbetriebsstrategien E1-5 entlang des Streckenprofils 16 gefahren werden, jedoch erfolgt dies im Rahmen der übergeordneten und somit eine überlagerte Betriebsstrategie darstellenden Gesamtbetriebsstrategie G. Dies bedeutet, dass die Fahrzeuge f1-5 beziehungsweise ihre Einzelbetriebsstrategien E1-5 nicht vollständig von der Gesamtbetriebsstrategie G losgelöst werden, sondern die jeweiligen Einzelbetriebsstrategien E1-5 werden auf Basis beziehungsweise anhand der Gesamtbetriebsstrategie G koordiniert und durchgeführt, sodass die Fahrzeugkolonne 10 vor dem Streckenprofil 16 und danach auf Basis der Gesamtbetriebsstrategie G betrieben werden. Die Einzelbetriebsstrategien E1-5 sind somit individuelle, lokale Betriebsstrategien, welche jedoch über die Gesamtbetriebsstrategie G miteinander verknüpft sind. Wie bereits erläutert, wird die überlagerte Betriebsstrategie (Gesamtbetriebsstrategie G) beispielsweise in einer Cloud oder in einem Backend oder in zumindest einem der Fahrzeuge f1-5 ermittelt beziehungsweise berechnet und schließlich vorgegeben. Mit anderen Worten ist es denkbar, dass die zuvor genannte Recheneinrichtung, mittels welche die Gesamtbetriebsstrategie G und/oder die jeweiligen Einzelbetriebsstrategien E1-5 berechnet und vorgegeben werden, wenigstens eine Recheneinrichtung, insbesondere wenigstens eine elektronische Recheneinrichtung, wenigstens eines der Fahrzeuge f1-5 der Fahrzeugkolonne 10 umfasst.

Die Ermittlung und Vorgabe der Gesamtbetriebsstrategie G erfolgt in Abhängigkeit von wenigstens einer Eingangsgröße 48. Vorliegend sind drei Eingangsgrößen 48 vorgesehen. Bei diesen Eingangsgrößen 48 handelt es sich um die Verkehrsdichte, um die Windverhältnisse beziehungsweise um Windinformationen und um die Topografie beziehungsweise den Topografieverlauf des Streckenprofils 16. Wenigstens eine dieser drei Eingangsgrößen 48 wird genutzt, um in Abhängigkeit von der wenigstens einen Eingangsgröße die Gesamtbetriebsstrategie G zu berechnen beziehungsweise zu ermitteln. Die Verknüpfung der Einzelbetriebsstrategien E1-5 untereinander und/oder mit der Gesamtbetriebsstrategie G und somit beispielsweise mit der Recheneinrichtung erfolgt beispielsweise über eine V2V-Kommunikation, das heißt über eine Fahrzeug-zu-Fahrzeug-Kommunikation, sodass die Fahrzeuge f1-5, insbesondere direkt, untereinander Daten austauschen. Alternativ oder zusätzlich erfolgt die genannte Verknüpfung über V2X-Kommunikation, das heißt über eine Fahrzeug-zu-Infrastruktur-Kommunikation.

Insgesamt ist erkennbar, das beispielsweise je nach Verkehrssituation und/oder Wetter und/oder Topografie und/oder Anzahl an Fahrzeugen in der Fahrzeugkolonne 10 und/oder Geschwindigkeit usw. insbesondere jederzeit eine Abschätzung beziehungsweise Simulation erfolgen kann, ob zum Befahren des vorausliegenden Streckenprofils 16 eine einzige Gesamtkolonne, eine vorgebbare Anzahl an voneinander beabstandeten Teilkolonnen oder Einzelfahrzeuge vorteilhaft ist beziehungsweise sind, um eine energiegünstige Befahrung des Streckenprofils 16 zu realisieren. Bei beabstandeten Unter- beziehungsweise Teilkolonnen beziehungsweise Teilgruppen sowie bei Einzelfahrzeugen erfolgt beispielsweise wiederholt eine Bestimmung beziehungsweise Abschätzung beziehungsweise Simulation, ob eventuell wieder ein einziger Gesamtverband energetisch günstiger ist. Beispielsweise ist es vorgesehen, dass zum Zeitpunkt der Abstandsvergrößerung beziehungsweise Auftrennung der Fahrzeugkolonne 10 bereits ein Streckenpunkt beziehungsweise ein Zeitpunkt bekannt ist, zu welchem eine Wiedervereinigung der Fahrzeugkolonne 10, das heißt eine Verkleinerung des Abstands erfolgt. Insbesondere ist ein solcher Zeitpunkt beziehungsweise Streckenpunkt vorherbestimmt. Dieser vorherbestimmte Zeitpunkt beziehungsweise Streckenpunkt wird normalerweise auch eingehalten. Kommt es jedoch zu Veränderungen von Randbedingungen, so kann eine Neubewertung auch zu einem anderen Ergebnis führen, sodass beispielsweise eine Wiedervereinigung, das heißt ein Bilden des Gesamtverbands zeitlich und/oder örtlich vorgezogen oder hinausgeschoben beziehungsweise verzögert wird.

Bei der Bildung der Teilkolonnen müssen diese beziehungsweise die Fahrzeuge der Teilkolonnen nicht notwendiger Weise gleich verteilt sein, sondern es kann vorgesehen sein, dass sich beispielsweise zumindest zwei der Teilkolonnen hinsichtlich ihrer jeweiligen Anzahl an Fahrzeugen voneinander unterscheiden. Weist beispielsweise eine Teilkolonne n Fahrzeuge auf, so kann eine zweite Teilkolonne eine gegenüber n höhere oder geringere Anzahl an Fahrzeugen umfassen. Trotz der beschriebenen Beabstandung der einzelnen Fahrzeuge beziehungsweise Teilkolonnen und trotz des Einsatzes der zumindest teilweise voneinander unterschiedlichen Einzelbetriebsstrategien ist und bleibt die überlagerte Gesamtbetriebsstrategie hinsichtlich der Führung der Fahrzeugkolonne 10 zentrale Steuer- und/oder Regelinstanz für jeweilige Fahrstrategien der Fahrzeuge, seien diese nun ähnlich bis gleich oder im beabstandeten Fall leicht bis stark unterschiedlich.

## Patentansprüche

1. Verfahren zum Bewegen einer ein erstes Fahrzeug (f1) und wenigstens ein dem ersten Fahrzeug (f1) ständig und direkt folgendes zweites Fahrzeug (f2) aufweisenden Fahrzeugkolonne (10), bei welchem die Fahrzeuge (f1, f2) auf Basis einer der Fahrzeugkolonne (10) zugeordneten, vorgebbaren Gesamtbetriebsstrategie (G) zumindest vorübergehend in einem vorgebbaren, gleichbleibenden Abstand (d2) zueinander entlang einer Fahrstrecke (12) bewegt werden,
**dadurch gekennzeichnet, dass**
- für das jeweilige Fahrzeug (f1, f2) der Fahrzeugkolonne (10) in Abhängigkeit von einem vorausliegenden Streckenprofil (16) eine jeweilige Einzelbetriebsstrategie (E1, E2) vorgegeben wird, wobei sich die Einzelbetriebsstrategien (E1, E2) der Fahrzeuge (f1, f2) voneinander unterscheiden,
- im Rahmen der Gesamtbetriebsstrategie (G) der Abstand (d2) der Fahrzeuge (f1, f2) vergrößert wird, bevor die Fahrzeugkolonne (10) das Streckenprofil (16) erreicht,
- das jeweilige Fahrzeug (f1, f2) auf Basis der jeweiligen Einzelbetriebsstrategie (E1, E2) entlang des Streckenprofils (16) bewegt wird, und
- die Fahrzeugkolonne (10) nach Zurücklegen des Streckenprofils (16) auf Basis der Gesamtbetriebsstrategie (G) bewegt wird.

2. Verfahren nach Anspruch 1,
**dadurch gekennzeichnet, dass**
der Abstand (d2) nach einem Beginn des Streckenprofils (16) verringert wird.

3. Verfahren nach Anspruch 1 oder 2,
**dadurch gekennzeichnet, dass**
sich die Einzelbetriebsstrategien (E1, E2) in ihren Geschwindigkeiten voneinander unterscheiden, mit welchen die jeweiligen Fahrzeuge (f1, f2) entlang des Streckenprofils (16) bewegt werden.

4. Verfahren nach einem der vorhergehenden Ansprüche,
**dadurch gekennzeichnet, dass**:
- die Fahrzeugkolonne (10) wenigstens ein dem ersten Fahrzeug (f1) vorweg fahrendes drittes Fahrzeug (f3) und wenigstens ein dem zweiten Fahrzeug (f2) folgendes, viertes Fahrzeug (f4) aufweist,
- das erste Fahrzeug (f1) und das dritte Fahrzeug (f3) beim Bewegen entlang des Streckenprofils (16) eine erste Teilkolonne (T1) bilden, in welcher das erste Fahrzeug (f1) und das dritte Fahrzeug (f3) mit einem zweiten Abstand (d1) zueinander entlang des Streckenprofils (16) bewegt werden,
- das zweite Fahrzeug (f2) und das vierte Fahrzeug (f4) beim Bewegen entlang des Streckenprofils (16) eine zweite Teilkolonne (T2) bilden, in welcher das zweite Fahrzeug (f2) und das vierte Fahrzeug (f4) mit einem dritten Abstand (d3) zueinander entlang des Streckenprofils (16) bewegt werden, und
- zumindest nach dem Vergrößern des ersten Abstands (d2) dieser größer als der zweite Abstand (d1) und größer als der dritte Abstand (d3) ist.

5. Verfahren nach Anspruch 4,
**dadurch gekennzeichnet, dass**
der zweite Abstand (d1) und/oder der dritte Abstand (d3) zumindest während des Bewegens entlang des Streckenprofils (16) gleich bleibt.

6. Verfahren nach Anspruch 4 oder 5,
**dadurch gekennzeichnet, dass**
nach Zurücklegen des Streckenprofils (16) und nach dem Verkleinern des ersten Abstands (d2) dieser dem zweiten Abstand (d1) und dem dritten Abstand (d3) entspricht.

7. Verfahren nach einem der vorhergehenden Ansprüche,
**dadurch gekennzeichnet, dass**
die jeweilige Einzelbetriebsstrategie (E1, E2) und/oder die Gesamtbetriebsstrategie (G) in Abhängigkeit von einem jeweiligen Gewicht des jeweiligen Fahrzeugs (f1, f2) und/oder in Abhängigkeit von wenigstens einem eine Reibleistung des jeweiligen Fahrzeugs (f1, f2) charakterisierenden Reibleistungswerts und/oder in Abhängigkeit von einem jeweiligen Fahrwiderstand des jeweiligen Fahrzeugs (f1, f2) und/oder in Abhängigkeit von Windverhältnissen in der Umgebung des jeweiligen Fahrzeugs (f1, f2) und/oder in Abhängigkeit von der Anzahl an Fahrzeugen (f1-6) der Fahrzeugkolonne (10) und/oder in Abhängigkeit von einer jeweiligen Länge des jeweiligen Fahrzeugs (f1, f2) und/oder in Abhängigkeit von einer Verkehrssituation ermittelt wird.

8. Verfahren nach einem der vorhergehenden Ansprüche
**dadurch gekennzeichnet, dass**
die Gesamtbetriebsstrategie (G) und/oder die jeweilige Einzelbetriebsstrategie (E1, E2) mittels einer Voraussimulation ermittelt wird, bei welcher vor dem Bewegen der Fahrzeugkolonne (10) entlang des Streckenprofils (16) das Bewegen der Fahrzeugkolonne (10) entlang des Streckenprofils (16) simuliert wird.

9. Verfahren nach einem der vorhergehenden Ansprüche,
**dadurch gekennzeichnet, dass**
das vorausliegende Streckenprofil (16) eine Steigung (40) und/oder ein Gefälle (20) und/oder eine Kuppe (18) und/oder eine Kurve und/oder eine Senke (30) umfasst, und weiter auch wenigstens ein Verkehrszeichen und/oder wenigstens eine Lichtsignalanlage und/oder eine Kreuzung umfassen kann.

10. Vorrichtung, welche zum Durchführen eines Verfahrens nach einem der vorhergehenden Ansprüche ausgebildet ist.

## Claims

1. Method for moving a queue of vehicles (10) consisting of a first vehicle (11) and at least one second vehicle (12) continuously and directly following the first vehicle (11), wherein the vehicles (f1, f2) are at least temporarily moved along a route (12) at a presettable, constant distance (d2) from each other on the basis of a presettable overall operating strategy (G) assigned to the queue of vehicles (10),
**characterised in that**
- an individual operating strategy (E1, E2) is preset for the respective vehicles (f1, f2) as a function of an ahead route profile (16), the individual operating strategies (E1, E2) of the vehicles (f1, f2) being different from each other,
- the distance (d) between the vehicles (f1, f2) is increased within the overall operating strategy (G) before the queue of vehicles (10) reaches the route profile (16),
- the respective vehicle (f1, f2) is moved along the route profile (16) on the basis of the respective individual operating strategy (E1, E2), and
- the queue of vehicles (10) is moved on the basis of the overall operating strategy (G) after travelling the route profile (16).

2. Method according to claim 1,
**characterised in that**
the distance (d2) is reduced after a start of the route profile (16).

3. Method according to claim 1 or 2,
**characterised in that**
the individual operating strategies (E1, E2) differ from each other in the speeds at which the respective vehicles (f1, f2) are moved along the route profile (16).

4. Method according to any of the preceding claims,
**characterised in that**
- the queue of vehicles (10) comprises at least one third vehicle (f3) travelling in front of the first vehicle (f1) and at least one fourth vehicle (f4) following the second vehicle (f2),
- the first vehicle (f1) and the third vehicle (f3) form a first sub-queue (T1), in which the first vehicle (f1) and the third vehicle (f3) are moved at a second distance (d1) from each other along the route profile (16) when moving along the route profile (16),
- the second vehicle (f2) and the fourth vehicle (f4) form a second sub-queue (T2), in which the second vehicle (f2) and the fourth vehicle (f4) are moved at a third distance (d3) from each other along the route profile (16) when moving along the route profile (16), and
- the second distance (d1) is greater than the third distance (d3).

5. Method according to claim 4,
**characterised in that**
the second distance (d1) and/or the third distance (d3) remain(s) constant at least while moving along the route profile (16).

6. Method according to claim 4 or 5,
**characterised in that**
after travelling the route profile (16) and after the reduction of the first distance (d2), the first distance (d2) corresponds to the second distance (d1) and the third distance (d3).

7. Method according to any of the preceding claims,
**characterised in that**
the respective individual operating strategy (E1, E2) and/or the overall operating strategy (G) is/are determined as a function of the respective weight of the respective vehicle (f1, f2) and/or as a function of at least one friction power value characterising a friction power of the respective vehicle (f1, f2) and/or as a function of a respective driving resistance of the respective vehicle (f1, f2) and/or as a function of wind conditions in the surroundings of the respective vehicle (f1, f2) and/or as a function of the number of vehicles (f1-6) of the queue of vehicles (10) and/or as a function of a respective length of the respective vehicle (f1, f2) and/or as a function of a traffic situation.

8. Method according to any of the preceding claims,
**characterised in that**
the overall operating strategy (G) and/or the respective individual operating strategy (E1, E2) is/are determined by means of an advance simulation in which the movement of the queue of vehicles (10) along the route profile (16) is simulated before the queue of vehicles (10) moves along the route profile (16).

9. Method according to any of the preceding claims,
**characterised in that**
the route profile (16) ahead comprises an uphill gradient (40) and/or a downhill gradient (20) and/or a blind summit (18) and/or a curve and/or a dip (30) and can further comprise at least one traffic sign and/or at least one traffic light system and/or a junction.

10. Device for carrying out a method according to any of the preceding claims.

## Revendications

1. Procédé de déplacement d'une file de véhicules (10) présentant un premier véhicule (f1) et au moins un deuxième véhicule (f2) suivant en permanence et directement le premier véhicule (f1), lors duquel les véhicules (f1, f2) sont déplacés sur la base d'une stratégie d'exploitation globale (G) pouvant être prédéfinie, associée à la file de véhicules (10), au moins temporairement à un écart constant (d2), pouvant être prédéfini, l'un par rapport à l'autre le long d'un trajet (12),
**caractérisé en ce que**
- une stratégie d'exploitation individuelle respective (E1, E2) est prédéfinie pour le véhicule respectif (f1, f2) de la file de véhicules (10) en fonction d'un profil de trajet situé devant (16), dans lequel les stratégies d'exploitation individuelles (E1, E2) des véhicules (f1, f2) se différencient l'une de l'autre,
- l'écart (d2) des véhicules (f1, f2) est agrandi dans le cadre de la stratégie d'exploitation globale (G) avant que la file de véhicules (10) n'atteigne le profil de trajet (16),
- le véhicule respectif (f1, f2) est déplacé sur la base de la stratégie d'exploitation individuelle respective (E1, E2) le long du profil de trajet (16), et
- la file de véhicules (10) est déplacée après avoir parcouru le profil de trajet (16) sur la base de la stratégie d'exploitation globale (G).

2. Procédé selon la revendication 1,
**caractérisé en ce que**
l'écart (d2) est réduit après un début du profil de trajet (16).

3. Procédé selon la revendication 1 ou 2,
**caractérisé en ce que**
les stratégies d'exploitation individuelles (E1, E2) se différencient l'une de l'autre au niveau de leurs vitesses avec lesquelles les véhicules respectifs (f1, f2) sont déplacés le long du profil de trajet (16).

4. Procédé selon une des revendications précédentes,
**caractérisé en ce que** :
- la file de véhicules (10) présente au moins un troisième véhicule (f3) roulant devant le premier véhicule (f1) et au moins un quatrième véhicule (f4) suivant le deuxième véhicule (f2),
- le premier véhicule (f1) et le troisième véhicule (f3) forment lors du déplacement le long du profil de trajet (16) une première file partielle (T1) dans laquelle le premier véhicule (f1) et le troisième véhicule (f3) sont déplacés avec un deuxième écart (d1) l'un par rapport à l'autre le long du profil de trajet (16),
- le deuxième véhicule (f2) et le quatrième véhicule (f4) forment lors du déplacement le long du profil de trajet (16) une seconde file partielle (T2) dans laquelle le deuxième véhicule (f2) et le quatrième véhicule (f4) sont déplacés avec un troisième écart (d3) l'un par rapport à l'autre le long du profil de trajet (16), et
- le premier écart (d2) est supérieur au deuxième écart (d1) et supérieur au troisième écart (d3) au moins après son agrandissement.

5. Procédé selon la revendication 4,
**caractérisé en ce que**
le deuxième écart (d1) et/ou le troisième écart (d3) reste constant au moins pendant le déplacement le long du profil de trajet (16).

6. Procédé selon la revendication 4 ou 5,
**caractérisé en ce que**
le premier écart (d2) correspond au deuxième écart (d1) et au troisième écart (d3) après avoir parcouru le profil de trajet (16) et après sa réduction.

7. Procédé selon une des revendications précédentes,
**caractérisé en ce que**
la stratégie d'exploitation individuelle respective (E1, E2) et/ou la stratégie d'exploitation globale (G) est déterminée en fonction d'un poids respectif du véhicule respectif (f1, f2) et/ou en fonction d'au moins une valeur de puissance de friction caractérisant une puissance de friction du véhicule respectif (f1, f2) et/ou en fonction d'une résistance au roulement respective du véhicule respectif (f1, f2) et/ou en fonction de conditions de vent dans l'environnement du véhicule respectif (f1, f2) et/ou en fonction du nombre de véhicules (f1 à 6) de la file de véhicules (10) et/ou en fonction d'une longueur respective du véhicule respectif (f1, f2) et/ou en fonction d'une situation de circulation.

8. Procédé selon une des revendications précédentes,
**caractérisé en ce que**
la stratégie d'exploitation globale (G) et/ou la stratégie d'exploitation individuelle respective (E1, E2) est déterminée au moyen d'une simulation préalable lors de laquelle le déplacement de la file de véhicules (10) le long du profil de trajet (16) est simulé avant le déplacement de la file de véhicules (10) le long du profil de trajet (16).

9. Procédé selon une des revendications précédentes,
**caractérisé en ce que**
le profil de trajet situé devant (16) comprend une pente (40) et/ou une descente (20) et/ou un dos d'âne (18) et/ou un virage et/ou une cuvette (30), et peut en outre également comprendre au moins un panneau de signalisation et/ou au moins une installation de feux de signalisation et/ou un croisement.

10. Dispositif qui est réalisé pour la réalisation d'un procédé selon une des revendications précédentes.
